# EUROPEAN PATENT APPLICATION

(11) **EP 3 961 931 A2**
(43) Date of publication of application: **02.03.2022**
(21) Application number: 21190947.8
(22) Date of filing: 12.08.2021
(51) Int. Cl.: H04B 1/00

(54) **RADIO FREQUENCY CHIP, BASEBAND CHIP, AND WLAN DEVICE**

(30) Priority: 28.08.2020 CN 202010889734
(71) Applicant: Huawei Technologies Co., Ltd., Shenzhen, Guangdong 518129 (CN)
(72) Inventor: HAN, Fangmao, Shenzhen, 518129 (CN); NIU, Renchao, Shenzhen, 518129 (CN); WANG, Shengli, Shenzhen, 518129 (CN)
(74) Representative: Pfenning, Meinig & Partner mbB

(57) **Abstract**

A radio frequency chip, a baseband chip, and a WLAN device are disclosed, and relate to the field of wireless technologies. The radio frequency chip includes at least two signal generation circuits, at least three radio frequency transceiver circuits, and at least three intermediate frequency transceiver circuits. The at least two signal generation circuits include a first signal generation circuit and a second signal generation circuit. The first signal generation circuit and the second signal generation circuit each are configured to generate a radio frequency local oscillator signal, and provide the generated radio frequency local oscillator signal to a radio frequency transceiver circuit, where a frequency band to which the radio frequency local oscillator signal generated by the first signal generation circuit belongs is different from a frequency band to which the radio frequency local oscillator signal generated by the second signal generation circuit belongs. Any radio frequency transceiver circuit receives only a radio frequency local oscillator signal from one signal generation circuit at a time. The radio frequency transceiver circuit is configured to: convert a received radio frequency signal into an intermediate frequency signal based on the received radio frequency local oscillator signal, and send the obtained intermediate frequency signal to a corresponding intermediate frequency transceiver circuit; or convert an intermediate frequency signal from a corresponding intermediate frequency transceiver circuit into a radio frequency signal, and output the obtained radio frequency signal.

## Description

### TECHNICAL FIELD

This application relates to the field of wireless technologies, and in particular, to a radio frequency chip, a baseband chip, and a WLAN device.

### BACKGROUND

With development of wireless technologies, a wireless local area network (wireless local area network, WLAN) device can support a plurality of frequency bands.

Generally, the WLAN device that supports a plurality of frequency bands includes a plurality of antennas, a plurality of radio frequency chips, one baseband chip, and the like. The baseband chip is connected to each of the plurality of radio frequency chips, and the plurality of radio frequency chips are respectively connected to the plurality of antennas by using radio frequency traces.

However, currently, a radio frequency trace loss of the WLAN device is relatively large, and consequently, performance of the WLAN device is affected.

### SUMMARY

This application provides a radio frequency chip, a baseband chip, and a WLAN device, to resolve a problem that performance of a WLAN device is affected due to a relatively large loss of a radio frequency trace of the WLAN device. Technical solutions provided in this application are as follows:
According to a first aspect, this application provides a radio frequency chip. The radio frequency chip includes at least two signal generation circuits, at least three radio frequency transceiver circuits, and at least three intermediate frequency transceiver circuits. The at least two signal generation circuits include a first signal generation circuit and a second signal generation circuit, and the at least three radio frequency transceiver circuits are connected to the at least three intermediate frequency transceiver circuits in a one-to-one correspondence manner. The first signal generation circuit is configured to generate a first radio frequency local oscillator signal, the second signal generation circuit is configured to generate a second radio frequency local oscillator signal, and a frequency band to which the first radio frequency local oscillator signal belongs is different from a frequency band to which the second radio frequency local oscillator signal belongs. The first signal generation circuit is configured to provide the first radio frequency local oscillator signal for at least one radio frequency transceiver circuit in the at least three radio frequency transceiver circuits. The second signal generation circuit is configured to provide the second radio frequency local oscillator signal for at least one radio frequency transceiver circuit in the at least three radio frequency transceiver circuits. Any radio frequency transceiver circuit in the at least three radio frequency transceiver circuits receives only a radio frequency local oscillator signal from one of the at least two signal generation circuits at a time. Each of the at least three radio frequency transceiver circuits is configured to: convert a received radio frequency signal into an intermediate frequency signal based on the received radio frequency local oscillator signal, and send the obtained intermediate frequency signal to a corresponding intermediate frequency transceiver circuit; or convert an intermediate frequency signal from a corresponding intermediate frequency transceiver circuit into a radio frequency signal, and output the obtained radio frequency signal.

The radio frequency chip can support at least two frequency bands. When a radio frequency chip in a WLAN device is the radio frequency chip provided in this embodiment of this application, because the radio frequency chip can send and receive radio frequency signals of at least two frequency bands, the radio frequency chip can be connected to an antenna configured to send and receive the radio frequency signals of the at least two frequency bands. In this way, the antenna configured to send and receive the radio frequency signals of the at least two frequency bands does not need to be separately connected to at least two radio frequency chips that support only a single frequency band. Therefore, during disposing of a radio frequency trace between the antenna and the radio frequency chip in the WLAN device, the radio frequency trace can be flexibly disposed based on deployment locations of the antenna and the radio frequency chip. This helps reduce a length of the radio frequency trace between the radio frequency chip and the antenna, reduce a probability that radio frequency traces intersect, reduce a loss of a signal on the radio frequency trace, and therefore improve performance of the WLAN device on which the radio frequency chip is disposed. Optionally, the radio frequency chip has at least three radio frequency signal pins, and a frequency band to which a signal output by the radio frequency signal pin belongs can be adjusted based on an actual requirement. In an implementation, the radio frequency chip further includes a first control circuit, and the first control circuit is configured to control a mode in which the at least two signal generation circuits provide the radio frequency local oscillator signal for the at least three radio frequency transceiver circuits. In this way, a frequency of the radio frequency signal output by the radio frequency signal pin or a frequency of a radio frequency signal received by the radio frequency signal pin can be adjusted based on requirements of different application scenarios, so that the radio frequency chip can be applied to different application scenarios.

In an implementation, a first switch circuit is disposed between each of the at least two signal generation circuits and each of the at least three radio frequency transceiver circuits. The first control circuit is specifically configured to control the first switch circuit between each of the at least two signal generation circuits and each of the at least three radio frequency transceiver circuits, to change a destination of a radio frequency local oscillator signal output by each of the at least two signal generation circuits.

In another implementation, the at least two signal generation circuits are all multi-channel output circuits, and each of the three radio frequency transceiver circuits are connected to an output port of each of the at least two signal generation circuits. In this case, the first control circuit is specifically configured to control an output status of the output port of each of the at least two signal generation circuits, to change a destination of a radio frequency local oscillator signal output by each of the at least two signal generation circuits.

Optionally, a frequency band of a radio frequency local oscillator signal generated by one or more signal generation circuits in the radio frequency chip is also adjustable. In an implementation, the radio frequency chip further includes a second control circuit, and the second control circuit is specifically configured to control a frequency band of the radio frequency local oscillator signal output by each of the at least two signal generation circuits.

For example, the second control circuit is specifically configured to: control the first radio frequency local oscillator signal generated by the first signal generation circuit within a time period t1 to belong to a first frequency band; control the second radio frequency local oscillator signal generated by the second signal generation circuit to belong to a second frequency band; and at least control a radio frequency local oscillator signal generated, within a time period t2, by either of the first signal generation circuit and the second signal generation circuit to belong to a third frequency band. The first frequency band, the second frequency band, and the third frequency band are different from each other, and the time period t1 does not overlap the time period t2.

In this way, a frequency band of the radio frequency local oscillator signal generated by each signal generation circuit may also be adjusted based on a specific requirement, so that an operating frequency band of the radio frequency chip can be flexibly adjusted, and the radio frequency chip can be applied to different application scenarios. In addition, when the radio frequency chip needs to be applied to a large quantity of application scenarios, a small quantity of signal generation circuits are disposed in the radio frequency chip by adjusting the frequency band of the radio frequency local oscillator signal generated by the signal generation circuit. This can reduce costs of the radio frequency chip, and reduce a size of the radio frequency chip.

Optionally, any two signal generation circuits in the at least two signal generation circuits operate in different frequency bands. In this way, different signal generation circuits can be used to generate radio frequency local oscillator signals of different frequency bands, and each signal generation circuit can be effectively used. This reduces costs of the radio frequency chip, and reduces a size of the radio frequency chip.

Each of the at least three intermediate frequency transceiver circuits supports an operating frequency band of each of the at least two signal generation circuits. In this way, it can be ensured that the intermediate frequency transceiver circuit can support an operating status of the radio frequency transceiver circuit.

The radio frequency chip has at least three radio frequency signal pins, and each of the at least three radio frequency transceiver circuits is connected to each of the at least three radio frequency signal pins by using a second switch circuit. When the radio frequency chip operates, the at least three radio frequency transceiver circuits are connected to the at least three radio frequency signal pins in a one-to-one correspondence manner. In this way, in different application scenarios, the second switch circuit may be adjusted based on an application requirement, to adjust a conduction status between the radio frequency signal pin and the radio frequency transceiver circuit.

The radio frequency chip includes the at least three radio frequency transceiver circuits and the at least three intermediate frequency transceiver circuits, the radio frequency chip supports at least two operating frequency bands, and the WLAN device needs to implement synchronous sending and receiving of signals of a same frequency during operation. Therefore, the radio frequency chip may further control components that have a same operating frequency band in the radio frequency chip to synchronously send and receive a signal.

In an implementation, the radio frequency chip further includes a transceiving control circuit. The transceiving control circuit is configured to: control at least one radio frequency transceiver circuit in the at least three radio frequency transceiver circuits and an intermediate frequency transceiver circuit to synchronously send and receive a signal, where the at least one radio frequency transceiver circuit receives a radio frequency local oscillator signal of a same frequency band, and the intermediate frequency transceiver circuit corresponds to the at least one radio frequency transceiver circuit.

In another possible implementation, the radio frequency chip further includes at least two transceiving control circuits corresponding to at least two frequency bands, and each of the at least two transceiving control circuits is configured to: control at least one radio frequency transceiver circuit in the at least three radio frequency transceiver circuits and an intermediate frequency transceiver circuit to synchronously send and receive a signal, where the at least one radio frequency transceiver circuit receives a radio frequency local oscillator signal of a corresponding frequency band, and the intermediate frequency transceiver circuit corresponds to the at least one radio frequency transceiver circuit. According to a second aspect, this application provides a baseband chip. The baseband chip includes: a baseband processing circuit and a plurality of intermediate frequency processing circuits. The plurality of intermediate frequency processing circuits include a first intermediate frequency processing circuit and a second intermediate frequency processing circuit, and an operating frequency band of the first intermediate frequency processing circuit is different from an operating frequency band of the second intermediate frequency processing circuit. The baseband processing circuit is configured to: generate a plurality of baseband output signals based on a received data signal, and distribute the plurality of baseband output signals to the plurality of intermediate frequency processing circuits; or obtain data signals by processing baseband input signals received from the plurality of intermediate frequency processing circuits, and output the obtained data signals. Each of the plurality of intermediate frequency processing circuits is configured to: convert the received baseband output signal into an intermediate frequency signal, perform signal processing on the obtained intermediate frequency signal in time domain, and output a processed intermediate frequency signal through a baseband chip pin; or perform signal processing, in time domain, on an intermediate frequency signal received from a baseband chip pin, convert a processed intermediate frequency signal into a baseband input signal, and output the obtained baseband input signal. A mode in which signals are provided between the baseband processing circuit and a plurality of baseband chip pins of the baseband chip through the plurality of intermediate frequency processing circuits is adjustable.

Because the mode in which signals are provided between the baseband processing circuit and the plurality of baseband chip pins of the baseband chip through the plurality of intermediate frequency processing circuits is adjustable, a frequency band to which a signal output by the baseband chip pin belongs is also adjustable. In this way, when a baseband chip in a WLAN device is the baseband chip provided in this embodiment of this application, an intermediate frequency trace between the baseband chip and a radio frequency chip can be flexibly disposed based on a characteristic that the frequency band to which the signal output by the baseband chip pin belongs is adjustable and deployment modes of the baseband chip and the radio frequency chip. This helps reduce a length of the intermediate frequency trace between the baseband chip and the radio frequency chip, reduce a probability that intermediate frequency traces intersect, and therefore improve performance of the WLAN device on which the baseband chip is disposed. In addition, the operating frequency band of the first intermediate frequency processing circuit is set to be different from the operating frequency band of the second intermediate frequency processing circuit, so that the baseband chip can support at least two frequency bands.

In an implementation, a mode in which signals are provided between the baseband processing circuit and the plurality of intermediate frequency processing circuits is adjustable, to adjust the mode in which signals are provided between the baseband processing circuit and the plurality of baseband chip pins of the baseband chip through the plurality of intermediate frequency processing circuits.

In the implementation in which the mode in which signals are provided between the baseband processing circuit and the plurality of intermediate frequency processing circuits is adjustable, the baseband processing circuit is connected to each of a plurality of signal cables, and each of the plurality of intermediate frequency processing circuits is connected to each of the plurality of signal cables by using a first switch circuit.

For example, the first switch circuit includes a plurality of first sub-switch circuits, and any intermediate frequency processing circuit in the plurality of intermediate frequency processing circuits is connected to one signal cable in the plurality of signal cables by using one first sub-switch circuit.

In another implementation in which the mode in which signals are provided between the baseband processing circuit and the plurality of intermediate frequency processing circuits is adjustable, the baseband processing circuit is connected to the plurality of intermediate frequency processing circuits by using a plurality of signal cables. The plurality of signal cables are connected to the plurality of intermediate frequency processing circuits in a one-to-one correspondence manner, each of the plurality of signal cables has a plurality of signal ends, and a plurality of signal ends of the baseband processing circuit are connected to the plurality of signal ends of each of the plurality of signal cables in a one-to-one correspondence manner by using a second switch circuit.

For example, the second switch circuit includes a plurality of second sub-switch circuits, and any signal end in the plurality of signal ends of the baseband processing circuit is connected to any signal end of one of the plurality of signal cables by using one second sub-switch circuit.

When the mode in which signals are provided between the baseband processing circuit and the plurality of intermediate frequency processing circuits is adjustable, to ensure that the intermediate frequency processing circuit can process a baseband input signal distributed by the baseband processing circuit, each of the plurality of intermediate frequency processing circuits supports an operating frequency band of the baseband processing circuit. In this case, a device that can support operating frequency bands before and after adjustment may be configured in each intermediate frequency processing circuit. For example, according to operating frequency bands that need to be supported by the intermediate frequency processing circuit before and after the adjustment, devices such as an amplifier and a filter that can support the operating frequency bands that need to be supported by the intermediate frequency processing circuit before and after the adjustment may be configured in the intermediate frequency processing circuit.

In another implementation, a mode in which signals are provided between the plurality of baseband chip pins and the plurality of intermediate frequency processing circuits is adjustable, to adjust the mode in which signals are provided between the baseband processing circuit and the plurality of baseband chip pins of the baseband chip through the plurality of intermediate frequency processing circuits.

In an implementation, each of the plurality of intermediate frequency processing circuits is connected to each of the plurality of baseband chip pins by using a third switch circuit.

For example, the third switch circuit includes a plurality of third sub-switch circuits, and any intermediate frequency processing circuit in the plurality of intermediate frequency processing circuits is connected to any baseband chip pin in the plurality of baseband chip pins by using one third sub-switch circuit.

Optionally, the baseband processing circuit includes a baseband circuit, a medium access control circuit, and a physical layer circuit, and/or the intermediate frequency processing circuit includes an analog front end circuit and a digital front end circuit.

According to a third aspect, this application provides a WLAN device. The WLAN device includes a baseband chip, at least two radio frequency chips, and at least four antennas. Configurations of the baseband chip, the radio frequency chip, and the antenna are as follows:
Each of the at least two radio frequency chips has at least three radio frequency signal pins and at least three intermediate frequency signal pins, at least three radio frequency signal pins and at least three intermediate frequency signal pins of a same radio frequency chip are in a one-to-one correspondence, and each of the at least two radio frequency chips is connected to at least two antennas in the at least four antennas.

Any radio frequency chip in the at least two radio frequency chips is configured to generate radio frequency local oscillator signals that belong to at least two frequency bands, and the at least three radio frequency signal pins of the any radio frequency chip include a first radio frequency signal pin and a second radio frequency signal pin.

The any radio frequency chip is configured to: convert, based on a radio frequency local oscillator signal that belongs to one frequency band in the at least two frequency bands, a radio frequency signal received from the first radio frequency signal pin into an intermediate frequency signal, and output the intermediate frequency signal obtained through conversion from an intermediate frequency signal pin corresponding to the first radio frequency signal pin; and convert an intermediate frequency signal received from the intermediate frequency signal pin corresponding to the first radio frequency signal pin into a radio frequency signal, and output the radio frequency signal obtained through conversion from the first radio frequency signal pin.

The any radio frequency chip is configured to convert, based on a radio frequency local oscillator signal that belongs to another frequency band in the at least two frequency bands, a radio frequency signal received from the second radio frequency signal pin into an intermediate frequency signal, and output the intermediate frequency signal obtained through conversion from an intermediate frequency signal pin corresponding to the second radio frequency signal pin; and convert an intermediate frequency signal received from the intermediate frequency signal pin corresponding to the second radio frequency signal pin into a radio frequency signal, and output the radio frequency signal obtained through conversion from the second radio frequency signal pin.

The baseband chip has a plurality of baseband chip pins, and at least three intermediate frequency signal pins of each of the at least two radio frequency chips are connected to at least three baseband chip pins of the plurality of baseband chip pins in a one-to-one correspondence manner.

The baseband chip is configured to: obtain an intermediate frequency signal based on a received data signal, and provide the obtained intermediate frequency signal to the radio frequency chip through the baseband chip pin of the baseband chip; or obtain a data signal based on an intermediate frequency signal received from any one of the plurality of baseband chip pins, and output the obtained data signal, where operating frequency bands corresponding to the plurality of baseband chip pins are adjustable.

Connection lines between all radio frequency signal pins and corresponding antennas in the WLAN device do not intersect, and connection lines between all intermediate frequency signal pins and corresponding baseband chip pins in the WLAN device do not intersect, and a connection line between any radio frequency signal pin in all the radio frequency signal pins and a corresponding antenna does not intersect a connection line between any intermediate frequency signal pin in all the intermediate frequency signal pins and a corresponding baseband chip pin.

Each of the at least two radio frequency chips can support at least two frequency bands, so that a radio frequency trace between the antenna and the radio frequency chip can be flexibly disposed based on deployment locations of the antenna and the radio frequency chip. This reduces a length of the radio frequency trace and a probability of intersection of radio frequency traces. The baseband chip includes a baseband processing circuit and a plurality of intermediate frequency processing circuits. A mode in which signals are provided between the baseband processing circuit and a plurality of baseband chip pins of the baseband chip through the plurality of intermediate frequency processing circuits is adjustable, so that an intermediate frequency trace between the baseband chip and the radio frequency chip can be flexibly disposed based on an actual requirement. This reduces a length of the intermediate frequency trace and a probability of intersection of intermediate frequency traces. In addition, it is arranged that any two radio frequency traces, any two intermediate frequency traces, or any radio frequency trace and any intermediate frequency trace in the WLAN device do not intersect, to effectively avoid intersection of traces in the WLAN device. This reduces problems related to costs of the WLAN device and a signal caused by intersection of traces, improves performance of the WLAN device, and helps control costs of the WLAN device.

Optionally, a frequency band to which a signal output by any radio frequency signal pin of any radio frequency chip in the at least two radio frequency chips belongs is adjustable. In other words, the any radio frequency chip meets the following condition: A frequency band to which a radio frequency local oscillator signal used for converting a radio frequency signal received by any radio frequency signal pin of the radio frequency chip into an intermediate frequency signal belongs is adjustable; and/or a frequency band to which a radio frequency local oscillator signal used for converting an intermediate frequency signal received from any intermediate frequency signal pin of any radio frequency chip in the at least two radio frequency chips into a radio frequency signal belongs is adjustable. In this way, flexibility of disposing the radio frequency trace and the intermediate frequency trace is further improved, and it is easier to avoid intersection of disposed radio frequency traces.

In an implementation of a connection manner between the antenna and the radio frequency signal pin, at least two antennas that are connected to a first radio frequency chip and that are in the at least four antennas and all radio frequency signal pins that are connected to the at least two antennas connected to the first radio frequency chip are sequentially arranged in a same first arrangement direction, and the first radio frequency chip is one of the at least two radio frequency chips. In this case, connection manners between the at least two antennas connected to the first radio frequency chip and all the radio frequency signal pins that are connected to the at least two antennas connected to the first radio frequency chip meet the following condition: When an i0^{th} radio frequency signal pin is connected to a j0^{th} antenna, an i1^{th} radio frequency signal pin is connected to a j1^{th} antenna arranged, where the i0^{th} radio frequency signal pin and the i1^{th} radio frequency signal pin are in all the radio frequency signal pins that are connected to the at least two antennas connected to the first radio frequency chip and that are arranged in the first arrangement direction, and the j0^{th} antenna and the j1^{th} antenna are in the at least two antennas that are connected to the first radio frequency chip and that are arranged in the first arrangement direction. i1 is greater than i0, j1 is greater than or equal to j0, and i0, i1, j0, and j1 are all positive integers.

In another implementation of the connection manner between the antenna and the radio frequency signal pin, either of a forward extension line and a reverse extension line of an arrangement direction of at least two antennas that are connected to a second radio frequency chip and that are in the at least four antennas intersects, at a first intersection, either of a forward extension line and a reverse extension line of an arrangement direction of all radio frequency signal pins that are connected to the at least two antennas connected to the second radio frequency chip, and the second radio frequency chip is one of the at least two radio frequency chips. In this case, connection manners between the at least two antennas connected to the second radio frequency chip and all the radio frequency signal pins that are connected to the at least two antennas connected to the second radio frequency chip meet the following condition: When an i2^{th} radio frequency signal pin closest to the first intersection is connected to a j2^{th} antenna closest to the first intersection, an i3^{th} radio frequency signal pin closest to the first intersection is connected to a j3^{th} antenna closest to the first intersection, where the i2^{th} radio frequency signal pin and the i3^{th} radio frequency signal pin are in all the radio frequency signal pins that are connected to the at least two antennas connected to the second radio frequency chip, and the j2^{th} antenna and the j3^{th} antenna are in the at least two antennas connected to the second radio frequency chip. i3 is greater than i2, j3 is greater than or equal to j2, and i2, i3, j2, and j3 are all positive integers.

In an implementation of a connection manner between the intermediate frequency signal pin and the baseband chip pin, either of a forward extension line and a reverse extension line of an arrangement direction of all intermediate frequency signal pins of a third radio frequency chip intersect, at a second intersection, either of a forward extension line and a reverse extension line of an arrangement direction of at least three baseband chip pins connected to all the intermediate frequency signal pins of the third radio frequency chip, and the third radio frequency chip is one of the at least two radio frequency chips. In this case, connection manners between all the intermediate frequency signal pins of the third radio frequency chip and the at least three baseband chip pins connected to all the intermediate frequency signal pins of the third radio frequency chip meet the following condition: When an i4^{th} intermediate frequency signal pin closest to the second intersection is connected to a j4^{th} baseband chip pin closest to the second intersection, an i5^{th} intermediate frequency signal pin closest to the second intersection is connected to a j5^{th} baseband pin closest to the second intersection, where the i4^{th} intermediate frequency signal pin and the i5^{th} intermediate frequency signal pin are in all the intermediate frequency signal pins of the third radio frequency chip, and the j4^{th} baseband chip pin and the j5^{th} baseband chip pin are in the at least three baseband chip pins connected to all the intermediate frequency signal pins of the third radio frequency chip. i5 is greater than i4, j5 is greater than or equal to j4, and i4, i5, j4, and j5 are all positive integers.

In another implementation of a connection manner between the intermediate frequency signal pin and the baseband chip pin, all intermediate frequency signal pins of a fourth radio frequency chip and at least three baseband chip pins connected to all the intermediate frequency signal pins of the fourth radio frequency chip are sequentially arranged in a same second arrangement direction, where the fourth radio frequency chip is one of the at least two radio frequency chips. In this case, connection manners between all the intermediate frequency signal pins of the fourth radio frequency chip and the at least three baseband chip pins connected to all the intermediate frequency signal pins of the fourth radio frequency chip meet the following condition: When an i6^{th} intermediate frequency signal pin is connected to a j6^{th} baseband chip pin, an i7^{th} intermediate frequency signal pin is connected to a j7^{th} baseband chip pin, where the i6^{th} intermediate frequency signal pin and the i7^{th} intermediate frequency signal pin are in all the intermediate frequency signal pins of the fourth radio frequency chip that are arranged in the second arrangement direction, and the j6^{th} baseband chip pin and the j7^{th} baseband chip pin are in the at least three baseband chip pins that are connected to all the intermediate frequency signal pins of the fourth radio frequency chip and that are arranged in the second arrangement direction. i7 is greater than i6, j7 is greater than or equal to j6, and i6, i7, j6, and j7 are all positive integers. Optionally, each of the at least four antennas is a single-band antenna, and each of the at least four antennas is connected to only one radio frequency signal pin. In this way, because an operating frequency band of each antenna is determined, costs of antennas are relatively low, and costs of the WLAN device can be reduced.

Alternatively, the at least four antennas include one or more multi-band antennas, and each of the one or more multi-band antennas is configured to connect to at least two radio frequency signal pins that transmit radio frequency signals of different frequency bands. In this way, a total quantity of antennas on the WLAN device can be reduced, so that a size of the entire WLAN device can be reduced, and layout space of the WLAN device can be optimized.

Optionally, at least two signal generation circuits in the at least two radio frequency chips generate, based on clock signals generated by a same clock source, radio frequency local oscillator signals that belong to a same frequency band. In this way, it can be ensured that at least two radio frequency chips in the WLAN device in a multiple-input multiple-output mode have a same clock source, so that clock delays and phase differences of the at least two radio frequency chips can be basically consistent. In this way, it can be ensured that the at least two radio frequency chips implement synchronous sending and receiving of signals of a same frequency.

In addition, all signal generation circuits in the at least two radio frequency chips generate radio frequency local oscillator signals based on clock signals generated by a same clock source. In this way, all signal generation circuits in the at least two radio frequency chips generate radio frequency local oscillator signals based on clock signals generated by a same clock source, so that a clock delay and a phase difference of a signal received or sent by each radio frequency chip can be further reduced, and performance of the WLAN device is further ensured.

To ensure a same clock source effect, circuits that are passed when a same clock source transmits clock signals generated by the same clock source to each of the at least two signal generation circuits have same impact on the clock signals generated by the same clock source. Optionally, quantities of circuits on at least two paths on which a signal is transmitted from the clock source to the at least two signal generation circuits may be set equal, and circuit parameters of the circuits that have a same function on the at least two paths are correspondingly the same. Alternatively, radio frequency traces that are passed when the same clock source transmits the clock signals generated by the same clock source to each of the at least two signal generation circuits are of a same length. In this way, it can be maximally ensured that losses of a signal on the radio frequency traces are the same.

The WLAN device includes at least two radio frequency chips, each radio frequency chip supports at least two operating frequency bands, and the WLAN device needs to implement synchronous sending and receiving of signals of a same frequency during operation. Therefore, the WLAN device may further control components that are in the WLAN device and that process signals of a same frequency band to synchronously send and receive a signal. In addition, because the WLAN device includes at least two radio frequency chips, synchronization sending and receiving of the at least two radio frequency chips may be scheduled by the baseband chip in a centralized manner. In an implementation, each of the at least two radio frequency chips further includes a transceiving control circuit, and a transceiving control circuit in any radio frequency chip in the at least two radio frequency chips is configured to: control an intermediate frequency transceiver circuit and at least one radio frequency transceiver circuit in at least three radio frequency transceiver circuits in the any radio frequency chip to synchronously send and receive a signal, where the at least one radio frequency transceiver circuit receives a radio frequency local oscillator signal of a same frequency band, and the intermediate frequency transceiver circuit corresponds to the at least one radio frequency transceiver circuit. Correspondingly, the baseband chip includes: a transceiving scheduling circuit, where the transceiving scheduling circuit is configured to schedule the transceiving control circuits in the at least two radio frequency chips in a centralized manner.

In another possible implementation, each of the at least two radio frequency chips further includes at least two transceiving control circuits corresponding to at least two frequency bands, and each of at least two transceiving control circuits in any radio frequency chip in the at least two radio frequency chips is configured to: control an intermediate frequency transceiver circuit and at least one radio frequency transceiver circuit in the at least three radio frequency transceiver circuits in the any radio frequency chip to synchronously send and receive a signal, where the at least one radio frequency transceiver circuit receives a radio frequency local oscillator signal of a corresponding frequency band, and the intermediate frequency transceiver circuit corresponds to the at least one radio frequency transceiver circuit. Correspondingly, the baseband chip includes at least two transceiving scheduling circuits corresponding to the at least two frequency bands, and any transceiving scheduling circuit in the at least two transceiving scheduling circuits is configured to schedule, in a centralized manner, a transceiving control circuit that is in the at least two radio frequency chips and that corresponds to a same frequency band as the any transceiving scheduling circuit.

In addition, a frequency band corresponding to each of the at least two transceiving scheduling circuits is adjustable, and each of the at least two transceiving scheduling circuits can communicate with all transceiving control circuits in each of the at least two radio frequency chips. In this way, decoupling between a scheduling signal and a radio frequency channel can be implemented, and an operation manner of each component in the WLAN device can be flexibly adjusted based on an application requirement.

In an implementation, the WLAN device may be an AP device.

### BRIEF DESCRIPTION OF DRAWINGS

FIG. 1 is a schematic structural diagram of a WLAN device according to an embodiment of this application;
FIG. 2 is a schematic structural diagram of a radio frequency chip according to an embodiment of this application;
FIG. 3 is a schematic structural diagram of another radio frequency chip according to an embodiment of this application;
FIG. 4 is a schematic diagram of connections between radio frequency transceiver circuits and signal generation circuits according to an embodiment of this application;
FIG. 5 is a schematic diagram of connections between radio frequency transceiver circuits and signal generation circuits according to an embodiment of this application;
FIG. 6 is a schematic structural diagram of still another radio frequency chip according to an embodiment of this application;
FIG. 7 is a schematic diagram of connections between radio frequency transceiver circuits and radio frequency signal pins according to an embodiment of this application;
FIG. 8 is a schematic diagram of connections between radio frequency transceiver circuits and radio frequency signal pins according to an embodiment of this application;
FIG. 9 is a schematic structural diagram of yet another radio frequency chip according to an embodiment of this application;
FIG. 10 is a schematic structural diagram of still yet another radio frequency chip according to an embodiment of this application;
FIG. 11 is a schematic diagram of connections between circuits in a radio frequency chip according to an embodiment of this application;
FIG. 12 is another schematic diagram of connections between circuits in a radio frequency chip according to an embodiment of this application;
FIG. 13 is a schematic structural diagram of a baseband chip according to an embodiment of this application;
FIG. 14 is a schematic structural diagram of another baseband chip according to an embodiment of this application;
FIG. 15 is a schematic structural diagram of still another baseband chip according to an embodiment of this application;
FIG. 16 is a schematic structural diagram of a WLAN device according to an embodiment of this application;
FIG. 17 is a schematic layout diagram of a WLAN device according to an embodiment of this application;
FIG. 18 is another schematic layout diagram of a WLAN device according to an embodiment of this application;
FIG. 19 is another schematic structural diagram of a WLAN device according to an embodiment of this application;
FIG. 20 is still another schematic layout diagram of a WLAN device according to an embodiment of this application; and
FIG. 21 is yet another schematic layout diagram of a WLAN device according to an embodiment of this application.

### DESCRIPTION OF EMBODIMENTS

To make objectives, technical solutions, and advantages of this application clearer, the following further describes implementations of this application in detail with reference to the accompanying drawings.

In this embodiment of this application, a WLAN device may be an air interface access device such as a wireless access point (wireless access point, WAP), a part of a wireless access point, or a small cell. The wireless access point may be a station device, a network device, or the like that has a WLAN chip.

In addition, the WLAN device in this embodiment of this application may be a centralized device, or may be a distributed device. This is not specifically limited in this embodiment of this application. The centralized WLAN device means that an antenna, a front-end module, a radio frequency chip, and a baseband chip in the WLAN device are all disposed on a same printed circuit board (printed circuit board, PCB). The distributed WLAN device means that an antenna, a front-end module, a radio frequency chip, and a baseband chip in the WLAN device are not disposed on a same PCB. For example, the distributed WLAN device may be a distributed device using a remote intermediate frequency technology. In other words, an antenna, a front-end module, and a radio frequency chip in the distributed WLAN device are disposed on a same PCB, and a baseband chip is disposed on another PCB. For another example, the distributed WLAN device may be a distributed device using a remote radio frequency technology. In other words, an antenna and a front-end module in the distributed WLAN device are disposed on a same PCB, and a radio frequency chip and a baseband chip are disposed on another PCB.

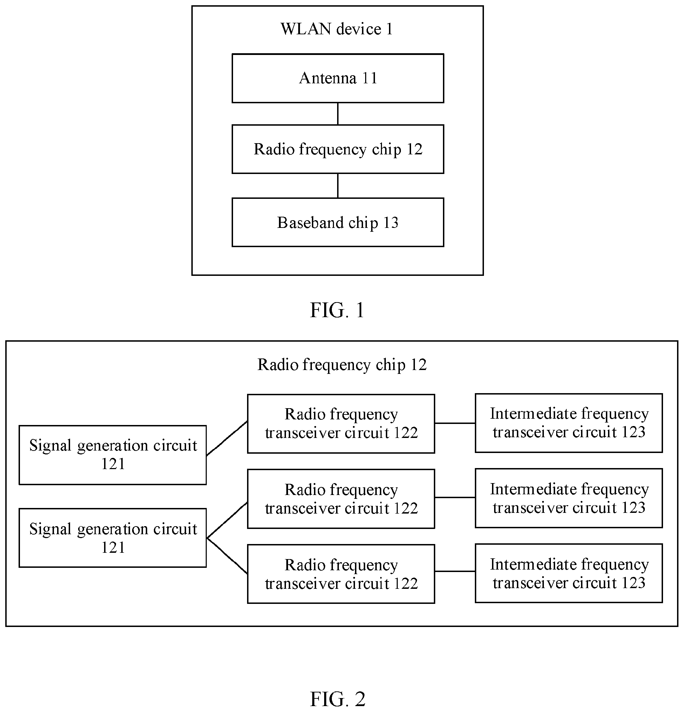

As shown in FIG. 1, a WLAN device 1 includes components such as an antenna 11, a radio frequency chip (which is also referred to as a radio frequency integrated circuit, radio frequency integrated circuit, or RFIC) 12, and a baseband (base band, BB) chip 13. The radio frequency chip is connected to both the baseband chip and the antenna. In this embodiment of this application, the baseband chip includes a baseband processing circuit and an intermediate frequency processing circuit. The baseband processing circuit includes a baseband circuit, a media access control (media access control, MAC) circuit, a physical layer (physical layer, PHY) circuit, and the like. The intermediate frequency processing circuit includes an analog front end (analog front end, AFE) circuit, a digital front end (digital front end, DFE) circuit, and the like. The analog front end circuit is configured to process an analog signal. The digital front end circuit is configured to process a digital signal. Therefore, the baseband chip in this embodiment of this application is also referred to as a system on chip (system on chip, SOC), and the intermediate frequency processing circuit is also referred to as a digital intermediate frequency circuit. In addition, the baseband chip may be an integrated circuit (integrated circuit, IC). The radio frequency chip may also be referred to as a radio frequency integrated circuit (radio frequency integrated circuit, RFIC).

The WLAN device can receive and transmit signals. In a process in which the WLAN device receives a signal, components in the WLAN device collaborate as follows: The antenna receives a radio wave, converts the radio wave into a radio frequency signal, and then sends the radio frequency signal obtained through conversion to the radio frequency chip. The radio frequency chip converts the radio frequency signal into an intermediate frequency signal, performs signal processing on the intermediate frequency signal obtained through conversion, and sends the processed intermediate frequency signal to the baseband chip. The baseband chip obtains a data signal based on the intermediate frequency signal, and outputs the obtained data signal. The data signal indicates an actual operation that needs to be performed on a signal received by the WLAN device, for example, indicates an operation to be performed for an access request sent by a terminal for accessing a website.

In a process in which the WLAN device sends a signal, components in the WLAN device collaborate as follows: The baseband chip generates an intermediate frequency signal based on the received data signal, performs signal processing on the obtained intermediate frequency signal, and sends the processed intermediate frequency signal to the radio frequency chip. The radio frequency chip performs signal processing on the intermediate frequency signal, converts the processed intermediate frequency signal into a radio frequency signal, and sends the radio frequency signal obtained through conversion to the antenna. The antenna converts the radio frequency signal into a radio wave and transmits the radio wave.

In a WLAN technology, a frequency band is expanded from a single 2.4 GHz frequency band to a 5 GHz frequency band. In addition, a multi-input multi-output (multi-input multi-output, MIMO) technology also becomes mature, and evolves from an early two-antenna technology to a four-antenna technology or an eight-antenna technology. Therefore, it is an inevitable trend for a WLAN device to be configured with a plurality of multi-band antennas. However, because the MIMO technology requires that a plurality of antennas simultaneously send and receive signals that belong to a same frequency band, and different antennas in the WLAN device are not completely isolated from each other, a signal transmitted by any antenna of the WLAN device is leaked to another antenna of the WLAN device through spatial coupling. However, signals transmitted on antennas in the WLAN device are different. Therefore, the signal leaked to the another antenna becomes an interference signal of the another antenna.

In an implementation, a spacing between the antennas on the WLAN device may be set as large as possible, to reduce signal strength of an interference signal between the antennas. In addition, to set a spacing between the antennas as large as possible, the antennas in the WLAN device is usually multi-band antennas. If each radio frequency chip supports only one frequency band, when the WLAN device supports a plurality of frequency bands, there are a plurality of radio frequency chips in the WLAN device, a same antenna needs to be connected to at least two radio frequency chips in the plurality of radio frequency chips, and all antennas that have a same operating frequency band on the WLAN device need to be connected to a same radio frequency chip. In this connection manner, a radio frequency trace between the radio frequency chip and some antenna is relatively long, causing a relatively large loss of a signal on the radio frequency trace. In addition, some measures are taken to avoid an intersection of radio frequency traces between the radio frequency chip and different antennas, and these measures further increase the loss of the signal on the radio frequency trace, which affects performance of the WLAN device.

An embodiment of this application provides a radio frequency chip. The radio frequency chip can support at least two frequency bands. In other words, the radio frequency chip can send and receive radio frequency signals of at least two frequency bands. When a radio frequency chip in a WLAN device is the radio frequency chip provided in this embodiment of this application, because the radio frequency chip can send and receive radio frequency signals of at least two frequency bands, the radio frequency chip can be connected to an antenna configured to send and receive the radio frequency signals of the at least two frequency bands. In this way, the antenna configured to send and receive the radio frequency signals of the at least two frequency bands does not need to be separately connected to at least two radio frequency chips that support only a single frequency band. Therefore, during disposing of a radio frequency trace between the antenna and the radio frequency chip in the WLAN device, the radio frequency trace can be flexibly disposed based on deployment locations of the antenna and the radio frequency chip. This helps reduce a length of the radio frequency trace between the radio frequency chip and the antenna, reduce a probability that radio frequency traces intersect, reduce a loss of a signal on the radio frequency trace, and therefore improve performance of the WLAN device on which the radio frequency chip is disposed.

FIG. 2 is a schematic structural diagram of a radio frequency chip 12 according to an embodiment of this application. As shown in FIG. 2, the radio frequency chip 12 includes components such as at least two signal generation circuits 121, at least three radio frequency transceiver circuits 122, and at least three intermediate frequency transceiver circuits 123. The at least two signal generation circuits 121 include a first signal generation circuit 121 and a second signal generation circuit 121. The at least three radio frequency transceiver circuits 122 are connected to the at least three intermediate frequency transceiver circuits 123 in a one-to-one correspondence manner. In addition, each radio frequency transceiver circuit 122 is further configured to connect to the antenna 11 in the WLAN device 1, and each intermediate frequency transceiver circuit 123 is further configured to connect to the baseband chip 13 in the WLAN device 1. FIG. 2 is a schematic structural diagram of the radio frequency chip 12 including two signal generation circuits 121, three radio frequency transceiver circuits 122, and three intermediate frequency transceiver circuits 123. Functions of the components in the radio frequency chip 12 are as follows:

The first signal generation circuit 121 is configured to generate a first radio frequency local oscillator signal. The second signal generation circuit 121 is configured to generate a second radio frequency local oscillator signal. A frequency band to which the first radio frequency local oscillator signal belongs is different from a frequency band to which the second radio frequency local oscillator signal belongs. For example, one of the first radio frequency local oscillator signal and the second radio frequency local oscillator signal belongs to a 2.4 GHz frequency band, and the other belongs to a 5 GHz frequency band. For another example, one of the first radio frequency local oscillator signal and the second radio frequency local oscillator signal belongs to a low band (low band) in a 5 GHz frequency band, and the other belongs to a high band (high band) in the 5 GHz frequency band.

The first signal generation circuit 121 is configured to provide the first radio frequency local oscillator signal for at least one radio frequency transceiver circuit 122 in the at least three radio frequency transceiver circuits 122. The second signal generation circuit 121 is configured to provide the second radio frequency local oscillator signal for at least one radio frequency transceiver circuit 122 in the at least three radio frequency transceiver circuits 122. Any radio frequency transceiver circuit 122 in the at least three radio frequency transceiver circuits 122 receives only a radio frequency local oscillator signal from one of the at least two signal generation circuits 121 at a time.

Each of the at least three radio frequency transceiver circuits 122 is configured to: convert a received radio frequency signal into an intermediate frequency signal based on the received radio frequency local oscillator signal, and send the obtained intermediate frequency signal to a corresponding intermediate frequency transceiver circuit 123; or convert an intermediate frequency signal from a corresponding intermediate frequency transceiver circuit 123 into a radio frequency signal, and output the obtained radio frequency signal. For example, in a signal sending process, after receiving an intermediate frequency signal from an intermediate frequency signal pin of the radio frequency chip 12, the intermediate frequency transceiver circuit 123 may perform signal processing on the intermediate frequency signal, and send a processed intermediate frequency signal to a corresponding radio frequency transceiver circuit 122. Then, the radio frequency transceiver circuit 122 converts the intermediate frequency signal into a radio frequency signal based on the radio frequency local oscillator signal, and outputs the radio frequency signal obtained through conversion by using a radio frequency signal pin of the radio frequency chip 12. In a signal receiving process, after receiving a radio frequency signal from a radio frequency signal pin, the radio frequency transceiver circuit 122 may convert the radio frequency signal into an intermediate frequency signal based on the radio frequency local oscillator signal, and send the intermediate frequency signal obtained through conversion to a corresponding intermediate frequency transceiver circuit 123. Then, the intermediate frequency transceiver circuit 123 performs signal processing on the intermediate frequency signal, and outputs the intermediate frequency signal obtained through conversion by using an intermediate frequency signal pin. The radio frequency signal pin is configured to transmit a radio frequency signal between the radio frequency chip 12 and another device connected to the radio frequency chip 12 by using the radio frequency signal pin. The intermediate frequency signal pin is configured to transmit an intermediate frequency signal between the radio frequency chip 12 and another device connected to the radio frequency chip 12 by using the intermediate frequency signal pin.

Because two radio frequency transceiver circuits 122 in the at least three radio frequency transceiver circuits 122 can convert a received intermediate frequency signal into a radio frequency signal or a convert a received radio frequency signal into an intermediate frequency signal based on the first radio frequency local oscillator signal and the second radio frequency local oscillator signal respectively, and the frequency band to which the first radio frequency local oscillator signal belongs is different from the frequency band to which the second radio frequency local oscillator signal belongs. Therefore, the radio frequency chip 12 can support at least two frequency bands, that is, the radio frequency chip can send and receive radio frequency signals of at least two frequency bands. When a radio frequency chip in a WLAN device is the radio frequency chip provided in this embodiment of this application, because the radio frequency chip can send and receive radio frequency signals of at least two frequency bands, the radio frequency chip can be connected to an antenna configured to send and receive the radio frequency signals of the at least two frequency bands. In this way, the antenna configured to send and receive the radio frequency signals of the at least two frequency bands does not need to be separately connected to at least two radio frequency chips that support only a single frequency band. Therefore, during disposing of a radio frequency trace between the antenna and the radio frequency chip in the WLAN device, the radio frequency trace can be flexibly disposed based on deployment locations of the antenna 11 and the radio frequency chip 12. This helps reduce a length of the radio frequency trace between the radio frequency chip 12 and the antenna 11, and reduce a probability that radio frequency traces intersect.

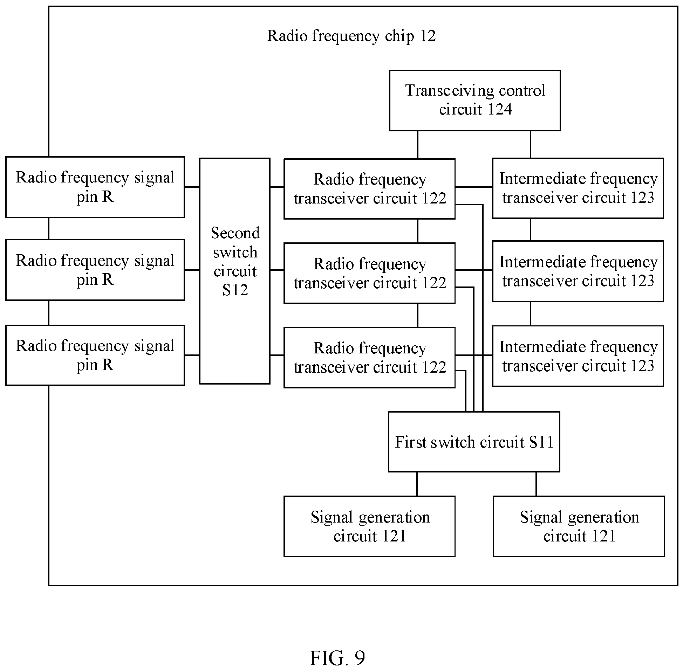

For example, referring to FIG. 9, FIG. 10, FIG. 12, and FIG. 13, when a radio frequency chip 122a supports two frequency bands, and an antenna 111 is a dual-band antenna that supports the two frequency bands, the antenna 111 may be connected only to the radio frequency chip 122a, and does not need to separately connect to two radio frequency chips that support different frequency bands. For another example, still referring to FIG. 9, FIG. 10, FIG. 12, and FIG. 13, when the radio frequency chip 122a supports two frequency bands, and the antenna 111 and an antenna 112 operate in the two frequency bands respectively, both the antenna 111 and the antenna 112 can be connected to the radio frequency chip 122a. In other words, both the antenna 111 and the antenna 112 do not need to be connected to two radio frequency chips whose operating frequency bands are the two frequency bands in a one-to-one correspondence manner. Therefore, when a radio frequency chip in a WLAN device is the radio frequency chip provided in this embodiment of this application, a manner of disposing the radio frequency trace can be optimized, a length of the radio frequency trace can be reduced, and a probability that radio frequency traces intersect can be reduced.

The radio frequency transceiver circuit 122 (TRX) includes radio frequency circuits such as an internal low-noise amplifier (internal low-noise amplifier, iLNA), a mixer (Mixer), a trans-impedance amplifier (trans-impedance amplifier, TIA), an uplink power control (uplink power control, UPC), and a pulsed power amplifier (pulsed power amplifier, PPA). The intermediate frequency transceiver circuit 123 includes analog baseband circuits such as a variable gain amplifier (variable gain amplifier, VGA), a low pass filter (low pass filter, LPF), and a transmit buffer (transmit buffer). A process in which the radio frequency transceiver circuit 122 converts a received radio frequency signal into an intermediate frequency signal based on the received radio frequency local oscillator signal may be referred to as down-conversion on a received radio frequency signal. A process in which the radio frequency transceiver circuit 122 converts an intermediate frequency signal from the corresponding intermediate frequency transceiver circuit 123 into a radio frequency signal may be referred to as up-conversion on a received intermediate frequency signal.

In an implementation, the signal generation circuit 121 may be a phase lock loop (phase lock loop, PLL).

In addition, the signal generation circuits 121 in the at least two signal generation circuits 121 do not affect each other. To be specific, frequencies of radio frequency local oscillator signals generated by the at least two signal generation circuits 121 may be totally different from each other or some of the frequencies are the same and others are different, , provided that it is at least ensured that the frequency band to which the first radio frequency local oscillator signal generated by the first signal generation circuit 121 belongs is different from the frequency band to which the second radio frequency local oscillator signal generated by the second signal generation circuit 121 belongs. This is not specifically limited in this embodiment of this application. When frequency bands of the radio frequency local oscillator signals generated by the at least two signal generation circuits 121 are completely different, that is, when any two signal generation circuits in the at least two signal generation circuits operate in different frequency bands, different signal generation circuits 121 can be used to generate radio frequency local oscillator signals of different frequency bands. Therefore, each signal generation circuit 121 can be effectively used, costs of the radio frequency chip 12 can be reduced, and a size of the radio frequency chip 12 can be reduced.

Optionally, the radio frequency chip 12 has at least three radio frequency signal pins, and in this embodiment of this application, a frequency band to which a signal output by the radio frequency signal pin belongs can be adjusted based on an actual requirement. In this way, a frequency of a radio frequency signal output by the radio frequency signal pin can be adjusted based on requirements of different application scenarios, so that the radio frequency chip 12 can be applied to different application scenarios.

In an implementation of adjusting a frequency band to which a signal output by the radio frequency signal pin belongs, an operating frequency band of the radio frequency transceiver circuit 122 is adjusted, so that the frequency band to which the signal output by the radio frequency signal pin belongs is adjusted.

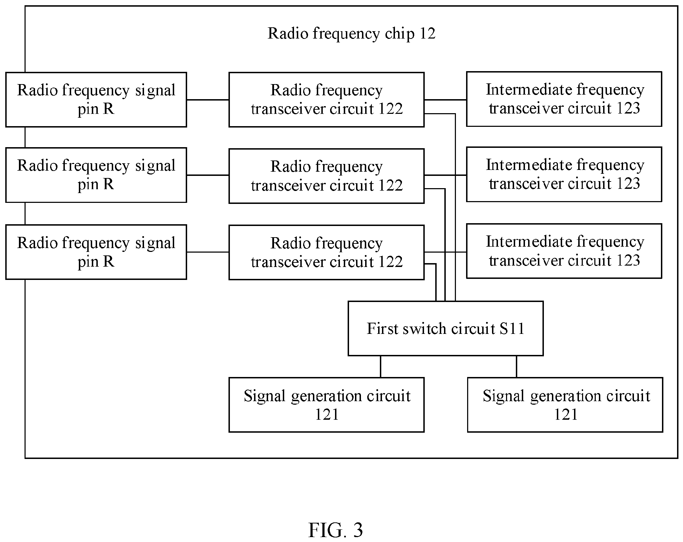

The radio frequency chip 12 further includes a first control circuit (not shown in FIG. 3). The first control circuit is configured to control a mode in which the at least two signal generation circuits 121 provide radio frequency local oscillator signals for the at least three radio frequency transceiver circuits 122. In other words, the first control circuit is configured to control each signal generation circuit 121 to provide a generated radio frequency local oscillator signal to a specific radio frequency transceiver circuit 122. As shown in FIG. 3, at least three radio frequency signal pins R of the radio frequency chip 12 are connected to the at least three radio frequency transceiver circuits 122 in a one-to-one correspondence manner. In this way, the frequency band to which the signal output by the radio frequency signal pin R belongs is the same as the operating frequency band of the radio frequency transceiver circuit 122. When frequency bands of radio frequency local oscillator signals received by the radio frequency transceiver circuits 122 are different, operating frequency bands of the radio frequency transceiver circuits 122 are different, and frequency bands to which signals output by the radio frequency signal pins R belongs change accordingly.

In an implementation, as shown in FIG. 3, a first switch circuit S11 is disposed between each of the at least two signal generation circuits 121 and each of the at least three radio frequency transceiver circuits 122. In this case, the first control circuit is specifically configured to control an operating status of the first switch circuit S11, to change a destination of a radio frequency local oscillator signal output by each of the at least two signal generation circuits 121. Optionally, the first control circuit may provide a control signal for the first switch circuit S11, to control, by using the control signal, a switch in the first switch circuit S11 to be on or off. For example, when the first switch circuit S11 is a transistor circuit, the first control circuit may be a drive circuit of the transistor circuit. The first control circuit may provide the first switch circuit S11 with a control signal for driving the first switch circuit S11 to operate, so as to control an on/off state of the switch in the first switch circuit S11.

It should be noted that the first control circuit may alternatively be disposed outside the radio frequency chip 12, and it is not limited in this application that the first control circuit is disposed on the radio frequency chip 12. For example, the first control circuit may alternatively be disposed on the WLAN device.

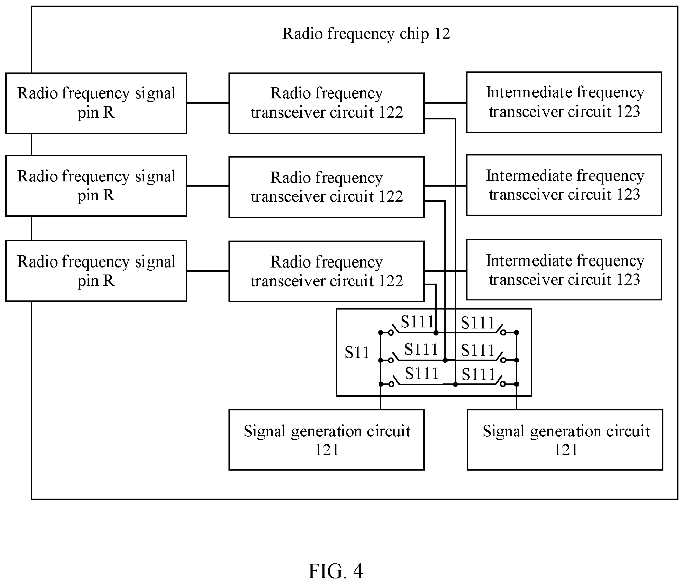

Optionally, a specific form of the first switch circuit S11 may be set based on an actual requirement. For example, a switch circuit may be disposed between the signal generation circuit 121 and the radio frequency transceiver circuit 122, and is configured to control a conduction status between the signal generation circuit 121 and the radio frequency transceiver circuit 122. In this case, the first switch circuit S11 includes all switch circuits between the at least two signal generation circuits 121 and the at least three radio frequency transceiver circuits 122. In an implementation, as shown in FIG. 4, a single-pole single-throw switch S111 may be disposed between the signal generation circuit 121 and the radio frequency transceiver circuit 122. One of a static contact and a moving contact of the single-pole single-throw switch S111 is connected to the signal generation circuit 121, and the other of the static contact and the moving contact of the single-pole single-throw switch S111 is connected to the radio frequency transceiver circuit 122. In FIG. 4, the moving contact of each single-pole single-throw switch S111 is connected to the signal generation circuit 121, and the static contact of each single-pole single-throw switch S111 is connected to the radio frequency transceiver circuit 122. In this case, the first switch circuit S11 in FIG. 4 includes six single-pole single-throw switches S111 between the at least two signal generation circuits 121 and the at least three radio frequency transceiver circuits.

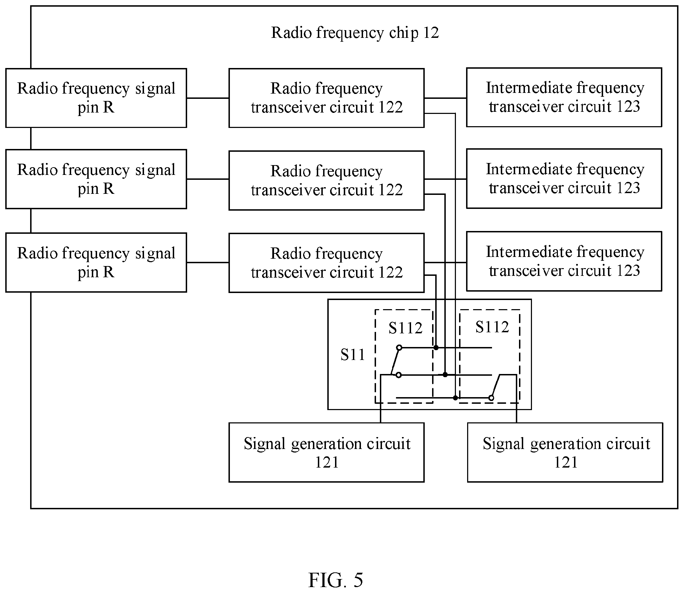

Alternatively, a switch circuit may be disposed between the signal generation circuit 121 and all radio frequency transceiver circuits 122, and is configured to control a conduction status of the signal generation circuit 121 and all radio frequency transceiver circuits 122. In other words, in the radio frequency chip, the at least two signal generation circuits 121 are connected to the at least three radio frequency transceiver circuits 122 by using at least two switch circuits that are in a one-to-one correspondence with the at least two signal generation circuits 121. In this case, the first switch circuit S11 includes the at least two switch circuits. In an implementation, as shown in FIG. 5, a single-pole multi-throw switch S112 may be disposed between the signal generation circuit 121 and all radio frequency transceiver circuits 122. A static contact of the single-pole multi-throw switch S112 is connected to the signal generation circuit 121, each moving contact of the single-pole multi-throw switch S112 is connected to one radio frequency transceiver circuit 122, and one static contact of the single-pole multi-throw switch S112 may be connected to one or more moving contacts at a time. In this case, the first switch circuit S11 in FIG. 5 includes two single-pole multi-throw switches S112 that are in a one-to-one correspondence with the two signal generation circuits 121. FIG. 5 is a schematic diagram in which one static contact of one single-pole multi-throw switch S112 in two single-pole multi-throw switches S112 is connected to one moving contact, and one static contact of the other single-pole multi-throw switch S112 in the two single-pole multi-throw switches S112 is connected to two moving contacts.

Alternatively, a switch circuit may be disposed between one radio frequency transceiver circuit 122 and all signal generation circuits 121, and is configured to control a conduction status of the radio frequency transceiver circuit 122 and all the signal generation circuits 121. In other words, the at least three radio frequency transceiver circuits 122 in the radio frequency chip 12 are connected to the at least two signal generation circuits 121 by using at least three switch circuits that are in a one-to-one correspondence with the at least three radio frequency transceiver circuits 122. In this case, the first switch circuit S11 includes the at least three switch circuits. In an implementation, a single-pole multi-throw switch may be disposed between the radio frequency transceiver circuit 122 and all the signal generation circuits 121. A static contact of the single-pole multi-throw switch is connected to the radio frequency transceiver circuit 122, each moving contact of the single-pole multi-throw switch is connected to one signal generation circuit 121, and one static contact of the single-pole multi-throw switch is connected to only one moving contact at a time. In this case, the first switch circuit S11 includes at least three single-pole multi-throw switches.

Alternatively, the first switch circuit S11 may be a switch circuit having a plurality of first ends and a plurality of second ends. The plurality of first ends are connected to all the radio frequency transceiver circuits 122 in a one-to-one correspondence manner, and the plurality of second ends are connected to all the signal generation circuits 121 in a one-to-one correspondence manner. The switch circuit can separately control connection statuses between different first ends and different second ends.

It should be noted that, in the foregoing several implementations of the first switch circuit S11, two different circuits may be two circuits that do not have a common part, or may be circuits obtained through division according to different division principles. In addition, the foregoing several implementations of the first switch circuit S11 are merely examples of the implementation of the first switch circuit S11, and are not used to limit a specific implementation of the first switch circuit S11. When implementing the radio frequency chip provided in this embodiment of this application, a person skilled in the art may adjust a specific implementation of the first switch circuit S11 based on an actual requirement. This is not specifically limited in this embodiment of this application.

In addition, the first switch circuit S11 may be an analog switch circuit, for example, a circuit that has a switching function and that is implemented by using a field-effect transistor. Alternatively, the first switch circuit S11 may be a digital switch circuit, for example, a circuit that has a switching function and that is implemented by using a gate circuit. Alternatively, the first switch circuit S11 may be a circuit that has a switching function and that is implemented by using an application-specific integrated circuit (application-specific integrated circuit, ASIC) or a programmable logic device (programmable logic device, PLD). This is not specifically limited in this embodiment of this application. The PLD may be a complex programmable logic device (complex programmable logic device, CPLD), a field-programmable gate array (field-programmable gate array, FPGA), a generic array logic (generic array logic, GAL), or any combination thereof.

In another possible implementation, the at least two signal generation circuits 121 may be all multi-channel output circuits, and each of the three radio frequency transceiver circuits 122 are connected to an output port of each of the at least two signal generation circuits 121. In this case, the first control circuit is specifically configured to control an output status of the output port of each of the at least two signal generation circuits 121, to change a destination of a radio frequency local oscillator signal output by each of the at least two signal generation circuits 121.

For example, it is assumed that the radio frequency chip 12 includes two signal generation circuits 121 and four radio frequency transceiver circuits 122. The two signal generation circuits 121 are respectively the first signal generation circuit 121 and the second signal generation circuit 121. The first signal generation circuit 121 and the second signal generation circuit 121 each has four output ports, the four radio frequency transceiver circuits 122 are connected to the four output ports of the first signal generation circuit 121 in a one-to-one correspondence manner, and the four radio frequency transceiver circuits 122 are connected to four output ports of the second signal generation circuit 121 in a one-to-one correspondence manner. The first control circuit can control an output status of each output port of the first signal generation circuit 121, to control whether the first signal generation circuit 121 outputs, by using any one of the four output ports, the first radio frequency local oscillator signal generated by the first signal generation circuit 121 to the signal generation circuit 121 connected to the any one of the four output ports. Similarly, the first control circuit may also control, in this manner, an output status of the output port of the second signal generation circuit 121, to control an output destination of the second radio frequency local oscillator signal generated by the second signal generation circuit 121.

In another implementation of adjusting the frequency band to which the signal output by the radio frequency signal pin belongs, each of the at least three radio frequency signal pins of the radio frequency chip 12 is connected to each of the at least two radio frequency transceiver circuits 122. In this way, a mode in which the plurality of radio frequency transceiver circuits 122 in the radio frequency chip 12 provide signals to the radio frequency signal pins may be adjusted, that is, connection manners between the radio frequency transceiver circuits 122 and the radio frequency signal pins may be adjusted, to implement adjustment of the frequency band to which the signal output by the radio frequency signal pin belongs.

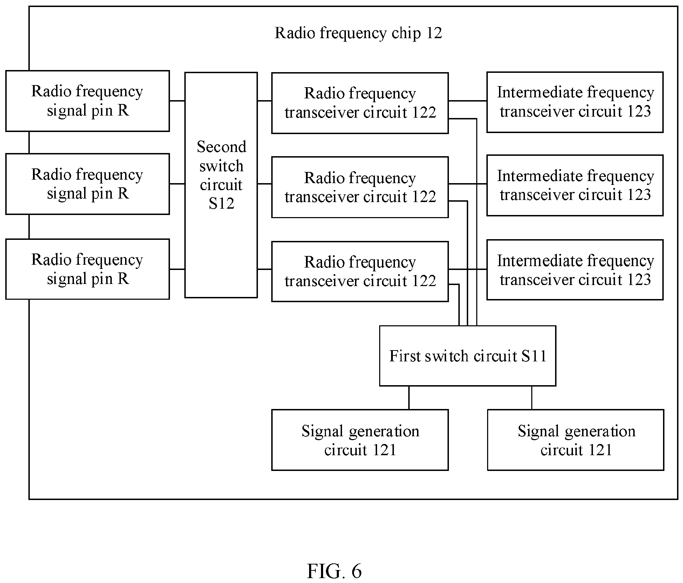

The radio frequency chip 12 further includes a third control circuit (not shown in FIG. 6). The third control circuit is configured to control a connection status of the plurality of radio frequency transceiver circuits 122 and the radio frequency signal pins in the radio frequency chip 12. To be specific, the third control circuit is configured to control each radio frequency transceiver circuit 122 to connect to a specific radio frequency signal pin, so that a frequency band to which a signal output by the radio frequency signal pin belongs is the same as the operating frequency band of the radio frequency transceiver circuit 122 connected to the radio frequency signal pin.

In an implementation, as shown in FIG. 6, each of the at least three radio frequency transceiver circuits 122 may be connected to each of the at least three radio frequency signal pins R by using a second switch circuit S12. When the radio frequency chip 12 operates, the at least three radio frequency transceiver circuits 122 are connected to the at least three radio frequency signal pins R in a one-to-one correspondence manner. In this case, the third control circuit is specifically configured to control an operating status of the second switch circuit S12, to change a connection manner between the radio frequency transceiver circuit 122 and the radio frequency signal pin R. In different application scenarios, the third control circuit may adjust an operating status of the second switch circuit S12 based on an application requirement, to adjust a conduction status between the radio frequency signal pin R and the radio frequency transceiver circuit 122.

Optionally, the third control circuit may provide a control signal for the second switch circuit S12, to control, by using the control signal, a switch in the second switch circuit S12 to be on or off. For example, when the second switch circuit S12 is a transistor circuit, the third control circuit may be a drive circuit of the transistor circuit, and the third control circuit may provide the second switch circuit S12 with a control signal for driving the second switch circuit S12 to operate, so as to control an on/off state of a switch in the second switch circuit S12.

It should be noted that the third control circuit may alternatively be disposed outside the radio frequency chip 12, and it is not limited in this application that the first control circuit is disposed on the radio frequency chip 12. For example, the third control circuit may alternatively be disposed on the WLAN device. In addition, the first control circuit and the third control circuit may be different parts of a same circuit, or may be two circuits independent of each other. Specific deployment modes of the first control circuit and the third control circuit are not limited in this embodiment of this application.

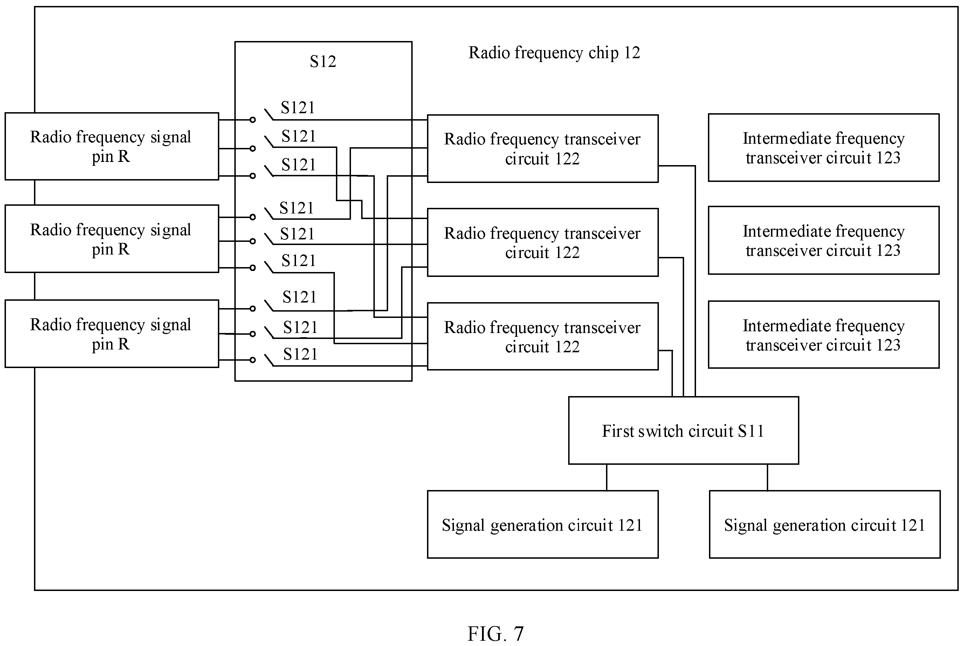

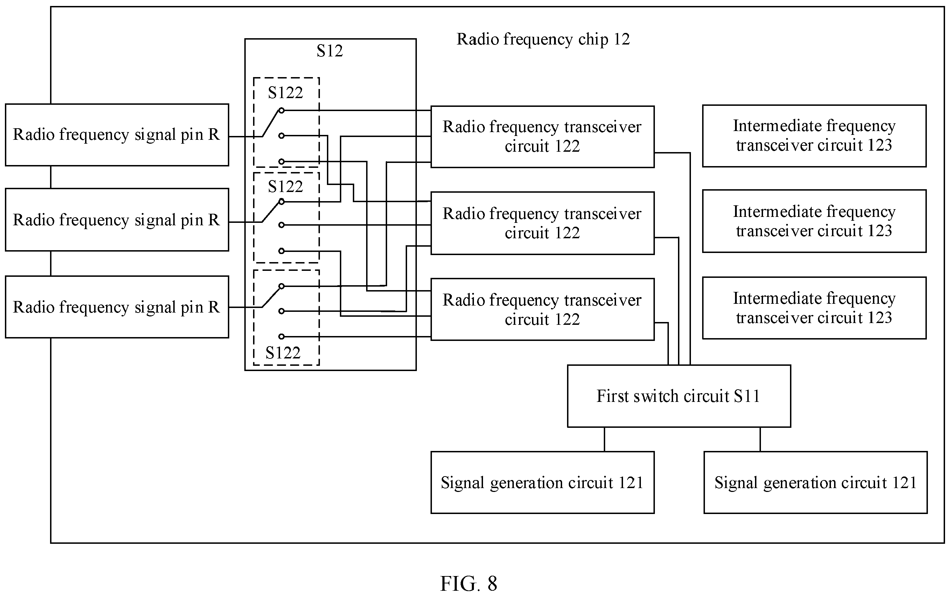

Optionally, a specific form of the second switch circuit S12 may be set based on an actual requirement. For example, a switch circuit may be disposed between the radio frequency signal pin R and the radio frequency transceiver circuit 122, and is configured to control a conduction status between the radio frequency signal pin R and the radio frequency transceiver circuit 122. In this case, the second switch circuit S12 includes all switch circuits between the at least three radio frequency signal pins R and the at least three radio frequency transceiver circuits 122. In an implementation, as shown in FIG. 7, a single-pole single-throw switch S121 may be disposed between the radio frequency signal pin R and the radio frequency transceiver circuit 122. One of a static contact and a moving contact of the single-pole single-throw switch S121 is connected to the radio frequency signal pin R, and the other of the static contact and the moving contact of the single-pole single-throw switch S121 is connected to the radio frequency transceiver circuit 122. In FIG. 7, a static contact of each single-pole single-throw switch S121 is connected to the radio frequency signal pin R, and a moving contact of each single-pole single-throw switch S121 is connected to the radio frequency transceiver circuit 122. In this case, the second switch circuit S12 in FIG. 7 includes nine single-pole single-throw switches S121 between the at least three radio frequency signal pins R and the at least three radio frequency transceiver circuits 122. Alternatively, a switch circuit may be disposed between the radio frequency signal pin R and all the radio frequency transceiver circuits 122, and is configured to control a conduction status between the radio frequency signal pin R and all the radio frequency transceiver circuits 122. In other words, in the radio frequency chip, the at least three radio frequency signal pins R are connected to the at least three radio frequency transceiver circuits 122 by using at least three switch circuits that are in a one-to-one correspondence with the at least three radio frequency signal pins R. In this case, the second switch circuit S12 includes the at least three switch circuits. In an implementation, as shown in FIG. 8, a single-pole multi-throw switch S122 may be disposed between the radio frequency signal pin R and all the radio frequency transceiver circuits 122. A static contact of the single-pole multi-throw switch S122 is connected to the radio frequency signal pin R, each moving contact of the single-pole multi-throw switch S122 is connected to one radio frequency transceiver circuit 122, and the static contact of the single-pole multi-throw switch S122 is connected to only one moving contact at a time. In this case, the second switch circuit S12 in FIG. 8 includes at least three single-pole multi-throw switches S122.

Alternatively, a switch circuit may be disposed between the radio frequency transceiver circuit 122 and all the radio frequency signal pins R, and is configured to control a conduction status between the radio frequency transceiver circuit 122 and all the radio frequency signal pins R. In other words, in the radio frequency chip 12, the at least three radio frequency transceiver circuits 122 are connected to the at least three radio frequency signal pins R by using at least three switch circuits that are in a one-to-one correspondence with the at least three radio frequency transceiver circuits 122. In this case, the second switch circuit S12 includes the at least three switch circuits. In an implementation, a single-pole multi-throw switch may be disposed between the radio frequency transceiver circuit 122 and all the radio frequency signal pins R. A static contact of the single-pole multi-throw switch is connected to the radio frequency transceiver circuit 122, each moving contact of the single-pole multi-throw switch is connected to one radio frequency signal pin R, and the static contact of the single-pole multi-throw switch is connected to only one moving contact at a time. In this case, the second switch circuit S12 includes at least three single-pole multi-throw switches.

Alternatively, the second switch circuit S12 may be a switch circuit having a plurality of first ends and a plurality of second ends. The plurality of first ends are connected to all the radio frequency transceiver circuits 122 in a one-to-one correspondence manner, and the plurality of second ends are connected to all the radio frequency signal pins R in a one-to-one correspondence manner. The switch circuit can separately control connection statuses between different first ends and different second ends.

It should be noted that, in the foregoing several implementations of the second switch circuit S12, two different circuits may be two circuits that do not have a common part, or may be circuits obtained through division according to different division principles. In addition, the foregoing several implementations of the second switch circuit S12 are merely examples of the implementation of the second switch circuit S12, and are not used to limit a specific implementation of the second switch circuit S12. When implementing the radio frequency chip provided in this embodiment of this application, a person skilled in the art may adjust a specific implementation of the second switch circuit S12 based on an actual requirement. This is not specifically limited in this embodiment of this application.

In addition, the second switch circuit S12 may be an analog switch circuit, for example, a circuit that has a switching function and that is implemented by using a field-effect transistor. Alternatively, the second switch circuit S12 may be a digital switch circuit, for example, a circuit that has a switching function and that is implemented by using a gate circuit. Alternatively, the second switch circuit S12 may be a circuit that has a switching function and that is implemented by using an application-specific integrated circuit or a programmable logic device. This is not specifically limited in this embodiment of this application. The programmable logic device may be a complex program logic device, a field-programmable gate array, a generic array logic, or any combination thereof.

Optionally, a frequency band of a radio frequency local oscillator signal generated by one or more signal generation circuits 121 in the radio frequency chip 12 is also adjustable. The radio frequency chip 12 further includes a second control circuit. The second control circuit is specifically configured to control a frequency band of the radio frequency local oscillator signal output by each of the at least two signal generation circuits 121.

For example, the second control circuit is specifically configured to: control the first radio frequency local oscillator signal generated by the first signal generation circuit 121 within a time period t1 to belong to a first frequency band; control the second radio frequency local oscillator signal generated by the second signal generation circuit 121 to belong to a second frequency band; and at least control a radio frequency local oscillator signal generated, within a time period t2, by either of the first signal generation circuit and the second signal generation circuit to belong to a third frequency band. The first frequency band, the second frequency band, and the third frequency band are different from each other, and the time period t1 does not overlap the time period t2.

In an example, the second control circuit is specifically configured to: in a first application scenario, control the first signal generation circuit to generate a first 5 GHz radio frequency local oscillator signal, and control the second signal generation circuit to generate a 2.4 GHz second radio frequency local oscillator signal; and in a second application scenario, control the first signal generation circuit to generate a 5 GHz first radio frequency local oscillator signal, and control the second signal generation circuit to generate a 6 GHz second radio frequency local oscillator signal

In an implementation, the at least two signal generation circuits 121 each can generate a radio frequency local oscillator signal based on a clock signal. Correspondingly, each of the at least two signal generation circuits 121 is specifically configured to perform frequency division processing on the clock signal based on a specified frequency division ratio, to obtain a radio frequency local oscillator signal. In this case, the second control circuit is specifically configured to send the frequency division ratio to the at least two signal generation circuits 121, to control, by using the frequency division ratio, a frequency band of the radio frequency local oscillator signal generated by each of the at least two signal generation circuits 121.

In this way, a frequency band of the radio frequency local oscillator signal generated by each signal generation circuit 121 may also be adjusted based on a specific requirement, and an operating frequency band of the radio frequency chip 12 can be flexibly adjusted, so that the operating frequency band of the radio frequency chip 12 can cover bandwidths of a plurality of frequency bands including 2.4 GHz and 5 GHz, and the radio frequency chip 12 can be applied to different application scenarios. In addition, when the radio frequency chip 12 needs to be applied to a large quantity of application scenarios, a small quantity of signal generation circuits 121 are disposed in the radio frequency chip 12 by adjusting the frequency band of the radio frequency local oscillator signal generated by the signal generation circuit 121. This can reduce costs of the radio frequency chip 12, and reduce a size of the radio frequency chip 12.

Correspondingly, to ensure that the intermediate frequency transceiver circuit 123 can support an operating status of the radio frequency transceiver circuit 122, the intermediate frequency transceiver circuit 123 may further be set, so that each of the at least three intermediate frequency transceiver circuits 123 supports an operating frequency band of each of the at least two signal generation circuits 121.

It should be noted that the first control circuit, the second control circuit, and the third control circuit may be different parts of a same circuit, or may be three circuits independent of each other. Alternatively, two of the first control circuit, the second control circuit, and the third control circuit belong to a same circuit. Specific deployment modes of the first control circuit, the second control circuit, and the third control circuit are not limited in this embodiment of this application. In addition, control functions of the first control circuit, the second control circuit, and the third control circuit may be implemented by using software. In addition, the second control circuit may alternatively be disposed outside the radio frequency chip 12, for example, may be disposed on the WLAN device.

The radio frequency chip 12 includes the at least three radio frequency transceiver circuits 122 and the at least three intermediate frequency transceiver circuits 123, the radio frequency chip 12 supports at least two operating frequency bands, and the WLAN device 1 needs to implement synchronous sending and receiving of signals of a same frequency during operation. Therefore, the radio frequency chip 12 may further control components that have a same operating frequency band in the radio frequency chip 12 to synchronously send and receive a signal

In an implementation, as shown in FIG. 9, the radio frequency chip 12 further includes a transceiving control circuit 124. The transceiving control circuit 124 is configured to: control at least one radio frequency transceiver circuit 122 in the at least three radio frequency transceiver circuits 122 and an intermediate frequency transceiver circuit 123 to synchronously send and receive a signal, where the at least one radio frequency transceiver circuit 122 receives a radio frequency local oscillator signal of a same frequency band, and the intermediate frequency transceiver circuit 123 corresponds to the at least one radio frequency transceiver circuit 122.

For example, one transceiving control circuit 124, four radio frequency transceiver circuits 122, and four intermediate frequency transceiver circuits 123 that are in a one-to-one correspondence with the four radio frequency transceiver circuits 122 are disposed in the radio frequency chip 12. Operating frequency bands of two radio frequency transceiver circuits 122 and two corresponding intermediate frequency transceiver circuits 123 corresponding to the two radio frequency transceiver circuits 122 are all 2.4 GHz, and operating frequency bands of the other two radio frequency transceiver circuits 122 and two corresponding intermediate frequency transceiver circuits 123 corresponding to the other two radio frequency transceiver circuits 122 are all 5 GHz. In this case, the transceiving control circuit 124 may control the two radio frequency transceiver circuits 122 whose operating frequency bands are 2.4 GHz and the two corresponding intermediate frequency transceiver circuits 123 to synchronously send and receive a signal, and control the other two radio frequency transceiver circuits 122 whose operating frequency bands are 5 GHz and the two corresponding intermediate frequency transceiver circuits 123 to synchronously send and receive a signal.

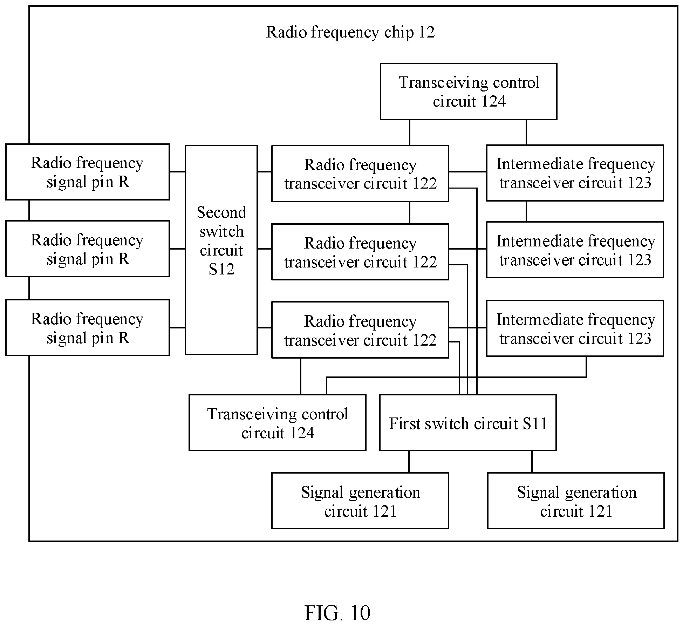

In another implementation, as shown in FIG. 10, when the radio frequency chip 12 supports at least two frequency bands, the radio frequency chip 12 further includes at least two transceiving control circuits 124 corresponding to the at least two frequency bands. Any transceiving control circuit in the at least two transceiving control circuits 124 is configured to: control at least one radio frequency transceiver circuit 122 in the at least three radio frequency transceiver circuits 122 and an intermediate frequency transceiver circuit 123 to synchronously send and receive a signal, where the at least one radio frequency transceiver circuit 122 receives a radio frequency local oscillator signal of a frequency band corresponding to the transceiving control circuit 124, and the intermediate frequency transceiver circuit 123 corresponds to the at least one radio frequency transceiver circuit 122. FIG. 10 is a schematic diagram in which the radio frequency chip 12 includes two transceiving control circuits 124 corresponding to two frequency bands.

For example, it is assumed that the radio frequency chip 12 supports two frequency bands: 2.4 GHz and 5 GHz. Two transceiving control circuits 124 are disposed in the radio frequency chip 12. One transceiving control circuit 124 controls synchronous sending and receiving of a 2.4 GHz signal, and the other transceiving control circuit 124 controls synchronous sending and receiving of a 5 GHz signal. Four radio frequency transceiver circuits 122 and four intermediate frequency transceiver circuits 123 that are in a one-to-one correspondence with the four radio frequency transceiver circuits 122 are disposed in the radio frequency chip 12. Operating frequency bands of two radio frequency transceiver circuits 122 and two corresponding intermediate frequency transceiver circuits 123 are all 2.4 GHz, and operating frequency bands the other two radio frequency transceiver circuits 122 and two corresponding intermediate frequency transceiver circuits 123 are all 5 GHz. In this case, the transceiving control circuit 124 that is configured to control synchronous sending and receiving of a 2.4 GHz signal controls the two radio frequency transceiver circuits 122 and the two corresponding intermediate frequency transceiver circuits 123 whose operating frequency bands are 2.4 GHz to synchronously send and receive a signal. The transceiving control circuit 124 that is configured to control synchronous sending and receiving of a 5 GHz signal controls the other two radio frequency transceiver circuits 122 and the two corresponding intermediate frequency transceiver circuits 123 whose operating frequency bands are 5 GHz to synchronously send and receive a signal.

It can be learned from the foregoing description that the frequency band to which the radio frequency local oscillator signal generated by the signal generation circuit 121 belongs is adjusted, so that the radio frequency chip 12 can be applied to different application scenarios. The following uses two typical scenarios as examples to describe operation principles when the radio frequency chip 12 is applied to the two typical scenarios.

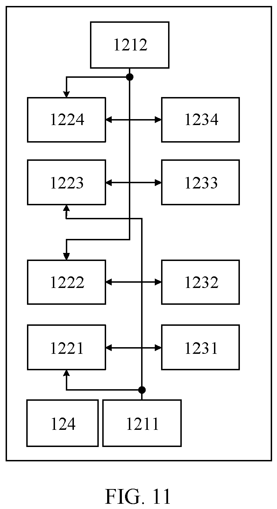

In a first application scenario, as shown in FIG. 11, the radio frequency chip 12 includes two signal generation circuits 1211 and 1212, four radio frequency transceiver circuits 1221 to 1224, four intermediate frequency transceiver circuits 1231 to 1234 that are in a one-to-one correspondence with the four radio frequency transceiver circuits 122, four radio frequency signal pins (not shown in FIG. 11), and one transceiving control circuit 124 (for ease of viewing, a connection between the transceiving control circuit 124 and another component is not shown). Operating frequency bands of the radio frequency transceiver circuit 122 and the corresponding intermediate frequency transceiver circuit 123 are the same, and the four radio frequency transceiver circuits 122 are connected to the four radio frequency signal pins in a one-to-one correspondence manner. A radio frequency local oscillator signal generated by the signal generation circuit 1211 belongs to the 2.4 GHz frequency band, and the signal generation circuit 1211 is configured to provide the radio frequency local oscillator signal belonging to the 2.4 GHz frequency band for the radio frequency transceiver circuits 1221 and 1223. A radio frequency local oscillator signal generated by the signal generation circuit 1212 belongs to the 5 GHz frequency band, and the signal generation circuit 1212 is configured to provide the radio frequency local oscillator signal belonging to the 5 GHz frequency band for the radio frequency transceiver circuits 1222 and 1224. In this way, two radio frequency channels in the radio frequency chip 12 support sending and receiving of a 2.4 GHz signal, and two radio frequency channels support sending and receiving of a 5 GHz signal. In other words, a radio frequency channel that includes the radio frequency transceiver circuit 1221 and the corresponding intermediate frequency transceiver circuit 1231 and another radio frequency channel that includes the radio frequency transceiver circuit 1223 and the corresponding intermediate frequency transceiver circuit 1231 support sending and receiving of a 2.4 GHz signal. A radio frequency channel that includes the radio frequency transceiver circuit 1222 and the corresponding intermediate frequency transceiver circuit 1232 and another radio frequency channel that includes the radio frequency transceiver circuit 1224 and the corresponding intermediate frequency transceiver circuit 1234 support sending and receiving of a 5 GHz signal. In addition, the transceiving control circuit 124 is configured to control radio frequency channels that support sending and receiving of a 2.4 GHz signal to synchronously send and receive a signal, and control radio frequency channels that support sending and receiving of a 5 GHz signal to synchronously send and receive a signal. The radio frequency channel is a channel used to send and receive a radio frequency signal. In the radio frequency chip 12, the radio frequency channel includes components such as the radio frequency transceiver circuit 122, the intermediate frequency transceiver circuit 123, and a signal cable between the radio frequency transceiver circuit 122 and the intermediate frequency transceiver circuit 123. For ease of viewing, components such as the radio frequency signal pin, the first switch circuit, and the second switch circuit are not shown in FIG. 11.

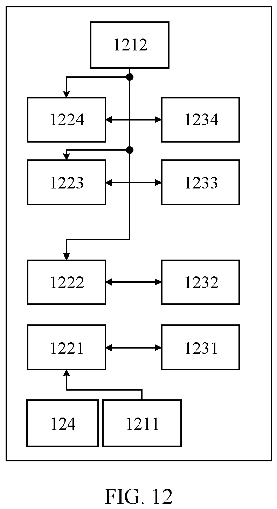

In a second application scenario, as shown in FIG. 12, the radio frequency chip 12 includes two signal generation circuits 1211 and 1212, four radio frequency transceiver circuits 1221 to 1224, four intermediate frequency transceiver circuits 1231 to 1234 that are in a one-to-one correspondence with the four radio frequency transceiver circuits 122, four radio frequency signal pins (not shown in FIG. 12), and one transceiving control circuit 124 (for ease of viewing, a connection between the transceiving control circuit 124 and another component is not shown). Operating frequency bands of the radio frequency transceiver circuit 122 and the corresponding intermediate frequency transceiver circuit 123 are the same, and the four radio frequency transceiver circuits 122 are connected to the four radio frequency signal pins in a one-to-one correspondence manner. A radio frequency local oscillator signal generated by the signal generation circuit 1211 belongs to the 2.4 GHz frequency band, and the signal generation circuit 1211 is configured to provide the radio frequency local oscillator signal belonging to the 2.4 GHz frequency band for the radio frequency transceiver circuit 1221. A radio frequency local oscillator signal generated by the signal generation circuit 1212 belongs to the 5 GHz frequency band, and the signal generation circuit 1212 is configured to provide the radio frequency local oscillator signal belonging to the 5 GHz frequency band for the radio frequency transceiver circuits 1222, 1223, and 1224. In this way, one radio frequency channel in the radio frequency chip 12 supports sending and receiving of a 2.4 GHz signal, and three radio frequency channels support sending and receiving of a 5 GHz signal. In other words, a radio frequency channel that includes the radio frequency transceiver circuit 1221 and the corresponding intermediate frequency transceiver circuit 1231 supports sending and receiving of a 2.4 GHz signal. A radio frequency channel that includes the radio frequency transceiver circuit 1222 and the corresponding intermediate frequency transceiver circuit 1232, another radio frequency channel that includes the radio frequency transceiver circuit 1223 and the corresponding intermediate frequency transceiver circuit 1232, and still another radio frequency channel that includes the radio frequency transceiver circuit 1224 and the corresponding intermediate frequency transceiver circuit 1234 support sending and receiving of a 5 GHz signal. In addition, the transceiving control circuit 124 is configured to control radio frequency channels that support sending and receiving of a 2.4 GHz signal to synchronously send and receive a signal, and control radio frequency channels that support sending and receiving of a 5 GHz signal to synchronously send and receive a signal. For ease of viewing, components such as the radio frequency signal pin, the first switch circuit, and the second switch circuit are not shown in FIG. 12.

Compared with sending and receiving a signal in the 5 GHz frequency band, sending and receiving a signal in the 2.4 GHz frequency band are greatly interfered. Therefore, compared with the first application scenario, the second application scenario provides more 5G transmit and receive channels. This effectively improves signal quality of a sent and received signal, improves a throughput of the radio frequency chip 12, and better meets a networking requirement of a user.

It can be learned from the foregoing description that, in this embodiment of this application, at least one of a mode of adjusting the frequency band to which the radio frequency local oscillator signal generated by the signal generation circuit 121 belongs and a mode in which the at least two signal generation circuits 121 provide radio frequency local oscillator signals to the at least three radio frequency transceiver circuits 122 may be used. Therefore, the operating frequency band of the radio frequency transceiver circuit 122 can be adjusted. It should be noted that the adjustment operation may be performed by a device provider before a device is delivered from a factory, or may be performed by a user based on an application requirement. This is not specifically limited in this embodiment of this application.

In conclusion, the radio frequency chip provided in this embodiment of this application includes at least two signal generation circuits. Radio frequency local oscillator signals generated by the at least two signal generation circuits belong to different frequency bands, and radio frequency local oscillator signals that belong to different frequency bands are separately provided for different radio frequency transceiver circuits. In this way, the radio frequency chip can support at least two frequency bands.

When a radio frequency chip in a WLAN device is the radio frequency chip provided in this embodiment of this application, because the radio frequency chip can send and receive radio frequency signals of at least two frequency bands, the radio frequency chip can be connected to an antenna configured to send and receive the radio frequency signals of the at least two frequency bands. In this way, the antenna configured to send and receive the radio frequency signals of the at least two frequency bands does not need to be separately connected to at least two radio frequency chips that support only a single frequency band. Therefore, during disposing of a radio frequency trace between the antenna and the radio frequency chip in the WLAN device, the radio frequency trace between the antenna and the radio frequency chip can be flexibly disposed based on deployment locations of the antenna and the radio frequency chip. This helps reduce a length of the radio frequency trace between the radio frequency chip and the antenna, reduce a probability that radio frequency traces intersect, reduce a loss of a signal on the radio frequency trace, and therefore improve performance of the WLAN device on which the radio frequency chip is disposed.

An embodiment of this application further provides a baseband chip. The baseband chip includes a baseband processing circuit 131 and a plurality of intermediate frequency processing circuits 132. A mode in which signals are provided between the baseband processing circuit 131 and a plurality of baseband chip pins of the baseband chip through the plurality of intermediate frequency processing circuits 132 is adjustable, so that a frequency band to which a signal output by the baseband chip pin belongs is adjustable. In this way, when a baseband chip in a WLAN device is the baseband chip provided in this embodiment of this application, an intermediate frequency trace between the baseband chip and a radio frequency chip can be flexibly disposed based on a characteristic that the frequency band to which the signal output by the baseband chip pin belongs is adjustable and deployment modes of the baseband chip and the radio frequency chip. This helps reduce a length of the intermediate frequency trace between the baseband chip and the radio frequency chip, reduce a probability that intermediate frequency traces intersect, and therefore improve performance of the WLAN device on which the baseband chip is disposed. The baseband chip pin is configured to transmit an intermediate frequency signal between the baseband chip and another device (for example, a radio frequency chip) connected to the baseband chip by using the baseband chip pin.

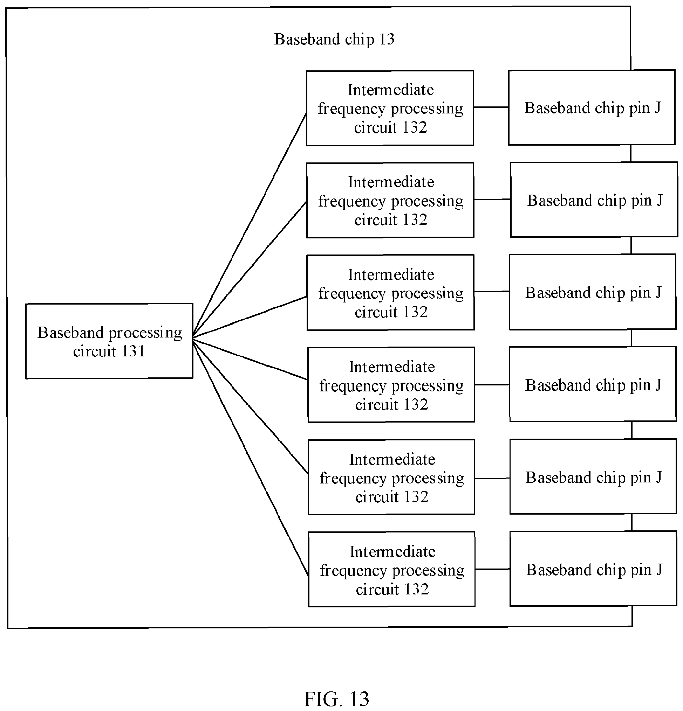

FIG. 13 is a schematic structural diagram of a baseband chip according to an embodiment of this application. As shown in FIG. 13, the baseband chip 13 includes a baseband processing circuit 131 and a plurality of intermediate frequency processing circuits 132. The plurality of intermediate frequency processing circuits 132 include a first intermediate frequency processing circuit 132 and a second intermediate frequency processing circuit 132. An operating frequency band of the first intermediate frequency processing circuit 132 is different from an operating frequency band of the second intermediate frequency processing circuit 132. FIG. 13 is a schematic structural diagram of the baseband chip 13 including one baseband processing circuit 131 and six intermediate frequency processing circuits 132. Functions of the components in the baseband chip 13 are as follows:

The baseband processing circuit 131 is configured to: generate a plurality of baseband output signals based on a received data signal, and distribute the plurality of baseband output signals to the plurality of intermediate frequency processing circuits 132; or obtain data signals by processing baseband input signals received from the plurality of intermediate frequency processing circuits 132, and output the obtained data signals.

Each of the plurality of intermediate frequency processing circuits 132 is configured to: convert the received baseband output signal into an intermediate frequency signal, perform signal processing on the obtained intermediate frequency signal in time domain, and output a processed intermediate frequency signal through a baseband chip pin J; or perform signal processing, in time domain, on an intermediate frequency signal received from a baseband chip pin J, convert a processed intermediate frequency signal into a baseband input signal, and output the obtained baseband input signal A mode in which signals are provided between the baseband processing circuit 131 and a plurality of baseband chip pins J of the baseband chip 13 through the plurality of intermediate frequency processing circuits 132 is adjustable. For example, in a signal sending process, the baseband processing circuit 131 may generate a plurality of baseband output signals based on the received data signal, and distribute the plurality of baseband output signals to the plurality of intermediate frequency processing circuits 132. The intermediate frequency processing circuit 132 converts the received baseband output signals into intermediate frequency signals, performs signal processing, in time domain, on the intermediate frequency signals obtained through conversion, and outputs the processed intermediate frequency signals through the baseband chip pins J. In a signal receiving process, after receiving the intermediate frequency signal from the baseband chip pin J, the intermediate frequency processing circuit 132 may perform signal processing on the intermediate frequency signal in time domain, convert the processed intermediate frequency signal into a baseband input signal, and send the baseband input signal obtained through conversion to the baseband processing circuit 131. Then, the baseband processing circuit 131 processes the baseband input signal sent by the intermediate frequency processing circuit 132 to the baseband processing circuit 131, to obtain a data signal, and outputs the obtained data signal

Because the baseband chip 13 and the radio frequency chip 12 need to collaborate to send and receive a radio frequency signal, when the radio frequency chip 12 supports at least two frequency bands, the baseband chip 13 also needs to support the at least two frequency bands. In this embodiment of this application, an operating frequency band of the first intermediate frequency processing circuit 132 is set to be different from an operating frequency band of the second intermediate frequency processing circuit 132, so that the baseband chip 13 can support at least two frequency bands. In a WLAN device, a radio frequency chip is connected to the baseband chip pin J of the baseband chip by using an intermediate frequency signal pin. When an operating frequency band of a radio frequency transceiver circuit is adjusted based on an actual requirement, an operating frequency band of an intermediate frequency transceiver circuit corresponding to the radio frequency transceiver circuit on the radio frequency chip 12 and a frequency band to which a signal output by an intermediate frequency signal pin connected to the intermediate frequency transceiver circuit belongs are adjusted accordingly. In this case, a connection manner between the baseband chip pin J and the intermediate frequency signal pin may be adjusted, and/or a frequency band to which a signal output by the baseband chip pin J belongs may be adjusted, so as to ensure that the baseband chip pin J can provide an appropriate intermediate frequency signal for a corresponding intermediate frequency signal pin, and to further ensure that an operation mode of the baseband chip matches an operation mode of the radio frequency chip.

In an implementation, an implementation of adjusting the connection manner between the baseband chip pin J and the intermediate frequency signal pin may be: setting each of at least three intermediate frequency signal pins of the radio frequency chip 12 to be connected to each of at least three baseband chip pins J by using a fourth switch circuit; and controlling a closed/opened status of the fourth switch circuit by using a fourth control circuit, to adjust a conduction status between the intermediate frequency signal pin and the baseband chip pin J. For an implementation of the fourth switch circuit, refer to an implementation of a second switch circuit between a radio frequency signal pin and a radio frequency transceiver circuit. In addition, for an implementation in which the fourth control circuit controls the fourth switch circuit, refer to an implementation in which a third control circuit controls the second switch circuit between the radio frequency signal pin and the radio frequency transceiver circuit.

In another possible implementation, an implementation of adjusting the frequency band to which the signal output by the baseband chip pin J belongs may be: adjusting a mode in which signals are provided between the baseband processing circuit 131 and the plurality of baseband chip pins J of the baseband chip 13 through the plurality of intermediate frequency processing circuits 132. In this way, the frequency band to which the signal output by the baseband chip pin J belongs can be adjusted based on an application requirement. In addition, the frequency band to which the signal output by the intermediate frequency signal pin belongs may be adjusted, and the frequency band to which the signal output by the baseband chip pin J belongs may be adjusted, so that the operation mode of the baseband chip matches the operation mode of the radio frequency chip, and the connection relationship between the baseband chip pin J and the intermediate frequency signal pin remains unchanged after a frequency band of a signal output by a corresponding pin is adjusted. For example, after a frequency band of a signal output by a corresponding pin is adjusted, a connection relationship between the plurality of baseband chip pins J and a plurality of intermediate frequency signal pins is still as follows: The plurality of baseband chip pins J are connected to the plurality of intermediate frequency signal pins in a one-to-one correspondence manner by using a plurality of intermediate frequency traces, and any two intermediate frequency traces do not intersect.

As an implementation of adjusting the mode in which signals are provided between the baseband processing circuit 131 and the plurality of baseband chip pins J of the baseband chip 13 through the plurality of intermediate frequency processing circuits 132, a mode in which signals are provided between the baseband processing circuit 131 and the plurality of intermediate frequency processing circuits 132 is adjustable.

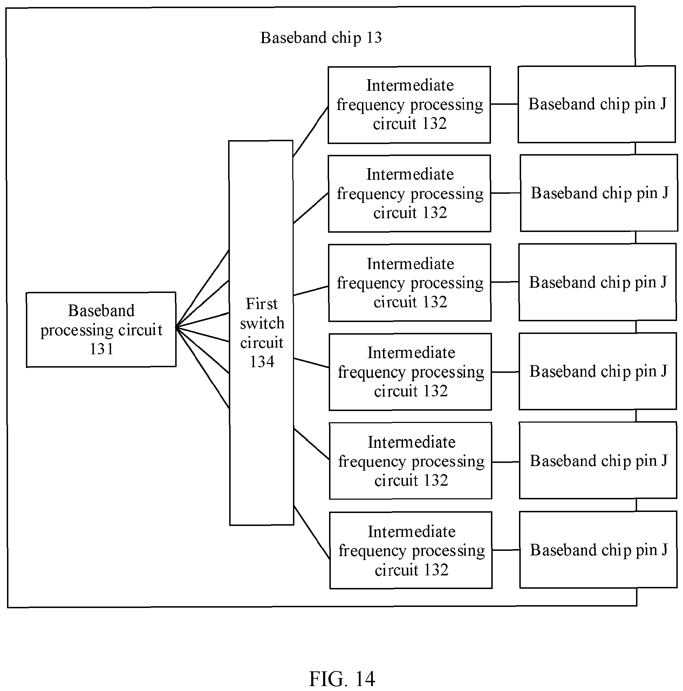

For example, as shown in FIG. 14, the baseband chip 13 may further include a first switch circuit 134. The baseband processing circuit 131 is connected to each of a plurality of signal cables, and each of the plurality of intermediate frequency processing circuits 132 is connected to each of the plurality of signal cables by using the first switch circuit 134. In an implementation, the first switch circuit 134 may include a plurality of first sub-switch circuits, and any intermediate frequency processing circuit 132 is connected to a signal cable by using one first sub-switch circuit. A closed/opened state of the first sub-switch circuit between the intermediate frequency processing circuit 132 and a signal cable connected to the baseband processing circuit 131 may be controlled, so that a connection status between the baseband processing circuit 131 and the intermediate frequency processing circuit 132 is controlled.

In this way, a connection status between the intermediate frequency processing circuit 132 and the signal cable can be adjusted by controlling the closed/opened state of the first switch circuit, to adjust the mode in which signals are provided between the baseband processing circuit 131 and the plurality of intermediate frequency processing circuits 132.

For another example, the baseband processing circuit 131 is connected to the plurality of intermediate frequency processing circuits 132 by using a plurality of signal cables, and the plurality of signal cables are connected to the plurality of intermediate frequency processing circuits 132 in a one-to-one correspondence manner. Each of the plurality of signal cables has a plurality of signal ends, and a plurality of signal ends of the baseband processing circuit 131 are connected to a plurality of signal ends of each of the plurality of signal cables in a one-to-one correspondence manner by using the second switch circuit. In an implementation, the second switch circuit may include a plurality of second sub-switch circuits, and any signal end of the plurality of signal ends of the baseband processing circuit 131 is connected to any signal end of one of the plurality of signal cables by using one second sub-switch circuit. The second sub-switch circuit between the signal end of the baseband processing circuit 131 and a signal end of a signal cable connected to the intermediate frequency processing circuit 132, so that the connection status between the baseband processing circuit 131 and the intermediate frequency processing circuit 132 is controlled.

In this way, the connection status between the signal end of the baseband processing circuit 131 and the signal end of the signal cable can be adjusted by controlling a closed/opened state of the second switch circuit, to adjust the mode in which signals are provided between the baseband processing circuit 131 and the plurality of intermediate frequency processing circuits 132.

It should be noted that, when the mode in which signals are provided between the baseband processing circuit 131 and the plurality of intermediate frequency processing circuits 132 is adjustable, to ensure that the intermediate frequency processing circuit 132 can process a baseband input signal distributed by the baseband processing circuit 131, each of the plurality of intermediate frequency processing circuits 132 needs to support an operating frequency band of the baseband processing circuit 131. In this case, a device that can support operating frequency bands before and after adjustment may be configured in each intermediate frequency processing circuit 132. For example, according to operating frequency bands that need to be supported by the intermediate frequency processing circuit 132 before and after the adjustment, devices such as an amplifier and a filter that can support the operating frequency bands that need to be supported by the intermediate frequency processing circuit 132 before and after the adjustment may be configured in the intermediate frequency processing circuit 132.

As another implementation of adjusting the mode in which signals are provided between the baseband processing circuit 131 and the plurality of baseband chip pins J of the baseband chip 13 through the plurality of intermediate frequency processing circuits 132, a mode in which signals are provided between the plurality of baseband chip pins J and the plurality of intermediate frequency processing circuits 132 is adjustable.

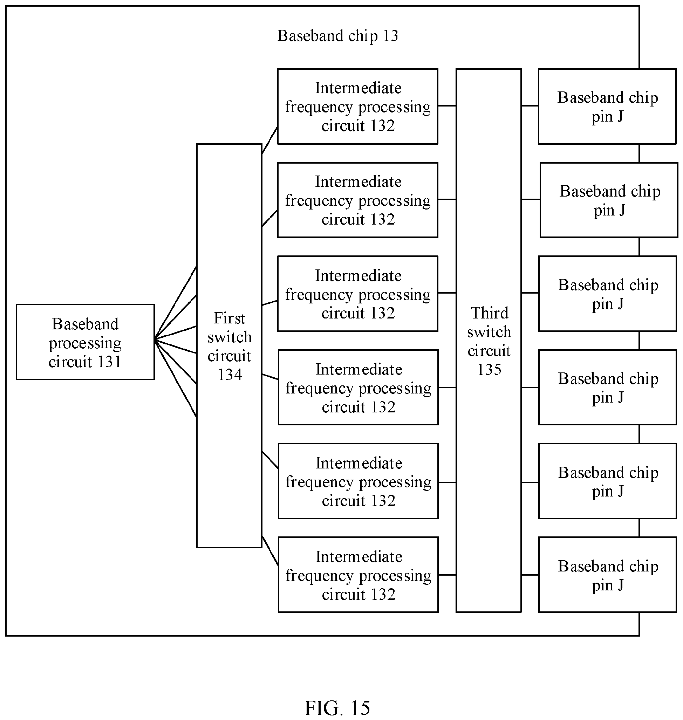

For example, as shown in FIG. 15, the baseband chip 13 may further include a third switch circuit 135, and each of the plurality of intermediate frequency processing circuits 132 is connected to each of the plurality of baseband chip pins J by using the third switch circuit 135. In an implementation, the third switch circuit 135 may include a plurality of third sub-switch circuits, and any intermediate frequency processing circuit 132 in the plurality of intermediate frequency processing circuits 132 is connected to any baseband chip pin J in the plurality of baseband chip pins J by using one third sub-switch circuit. The third sub-switch circuit between the intermediate frequency processing circuit 132 and the baseband chip pin J may be controlled, so that a connection status between the intermediate frequency processing circuit 132 and the baseband chip pin J is controlled. In this way, a closed/opened state of the third switch circuit 135 is controlled, to adjust a connection status between the baseband chip pin J and the intermediate frequency processing circuit 132.

For specific implementations of the first switch circuit 134, the second switch circuit, and the third switch circuit 135 in the baseband chip 13, refer to the implementation of the switch circuit in the radio frequency chip. In addition, for specific forms of the first switch circuit 134, the second switch circuit, and the third switch circuit 135 in the baseband chip 13, refer to the specific forms of the switch circuit in the radio frequency chip. Details are not described herein again.

It should be noted that, when the mode in which signals are provided between the baseband processing circuit 131 and the plurality of intermediate frequency processing circuits 132 is adjustable, the mode in which signals are provided between the plurality of baseband chip pins J and the plurality of intermediate frequency processing circuits 132 is adjustable. In addition, in this case, a specific implementation of adjusting the mode in which signals are provided between the baseband processing circuit 131 and the plurality of intermediate frequency processing circuits 132, and an implementation of adjusting the mode in which signals are provided between the plurality of baseband chip pins J and the plurality of intermediate frequency processing circuits 132 may be selected based on an actual requirement. For example, during controlling a connection status between each of the plurality of intermediate frequency processing circuits 132 and each of the plurality of signal cables of the baseband processing circuit 131 by using the first switch circuit, connection statuses between the plurality of signal ends of the baseband processing circuit 131 and the plurality of signal ends of each of the plurality of signal cables may be controlled by using the second switch circuit, so as to implement adjustment of the mode in which signals are provided between the baseband processing circuit 131 and the plurality of intermediate frequency processing circuits 132. In addition, a connection status of each of the plurality of intermediate frequency processing circuits 132 and each of the plurality of baseband chip pins J may be controlled by using the third switch circuit, so as to implement adjustment of the mode in which signals are provided between the plurality of baseband chip pins J and the plurality of intermediate frequency processing circuits 132. This is not specifically limited in this embodiment of this application.

It can be known from the foregoing description that, by adjusting the mode in which signals are provided between the baseband processing circuit 131 and the plurality of baseband chip pins J of the baseband chip 13 through the plurality of intermediate frequency processing circuits 132, demodulation of resources in the baseband chip 13 is implemented. Therefore, operating frequency bands of the plurality of intermediate frequency processing circuits 132 in the baseband chip 13 can be adjusted based on a specific application scenario, and the baseband chip 13 can support a MIMO operation mode with different quantities of channels.

It should be noted that, in this embodiment of this application, the baseband chip 13 may include one or more baseband processing circuits 131. When the baseband chip 13 includes one baseband processing circuit 131, the baseband chip 13 may be referred to as a single baseband chip. For example, a baseband chip whose model is BCM43694 is a single baseband chip. When the baseband chip 13 includes at least two (that is, two or more) baseband processing circuits 131, the baseband chip 13 may be referred to as a multi-baseband chip. For example, the baseband chip 13 whose model is QCA8074 is a multi-baseband chip.

In conclusion, an embodiment of this application further provides a baseband chip. The baseband chip includes a baseband processing circuit and a plurality of intermediate frequency processing circuits. A mode in which signals are provided between the baseband processing circuit and a plurality of baseband chip pins of the baseband chip through the plurality of intermediate frequency processing circuits is adjustable, so that a frequency band to which a signal output by the baseband chip pin belongs is adjustable. In this way, when a baseband chip in a WLAN device is the baseband chip provided in this embodiment of this application, an intermediate frequency trace between the baseband chip and a radio frequency chip can be flexibly disposed based on a characteristic that the frequency band to which the signal output by the baseband chip pin belongs is adjustable and deployment modes of the baseband chip and the radio frequency chip. This helps reduce a length of the intermediate frequency trace between the baseband chip and the radio frequency chip, reduce a probability that intermediate frequency traces intersect, and therefore improve performance of the WLAN device on which the baseband chip is disposed.

An embodiment of this application further provides a WLAN device. The WLAN device includes a baseband chip, at least two radio frequency chips, and at least four antennas. Each of the at least two radio frequency chips can support at least two frequency bands, so that a radio frequency trace between the antenna and the radio frequency chip can be flexibly disposed based on deployment locations of the antenna and the radio frequency chip. This reduces a length of the radio frequency trace and a probability of intersection of radio frequency traces. The baseband chip includes a baseband processing circuit and a plurality of intermediate frequency processing circuits. A mode in which signals are provided between the baseband processing circuit and a plurality of baseband chip pins of the baseband chip through the plurality of intermediate frequency processing circuits is adjustable, so that an intermediate frequency trace between the baseband chip and the radio frequency chip can be flexibly disposed based on an actual requirement. This reduces a length of the intermediate frequency trace and a probability of intersection of intermediate frequency traces. In addition, it is arranged that any two radio frequency traces, any two intermediate frequency traces, or any radio frequency trace and any intermediate frequency trace in the WLAN device do not intersect, to effectively avoid intersection of traces in the WLAN device. This reduces problems related to costs of the WLAN device and a signal caused by intersection of traces, improves performance of the WLAN device, and helps control costs of the WLAN device.

In this embodiment of this application, the WLAN device may be an air interface access device such as a wireless access point, a part of a wireless access point, or a small cell. In addition, the WLAN device in this embodiment of this application may be a centralized device, or may be a distributed device. This is not specifically limited in this embodiment of this application.

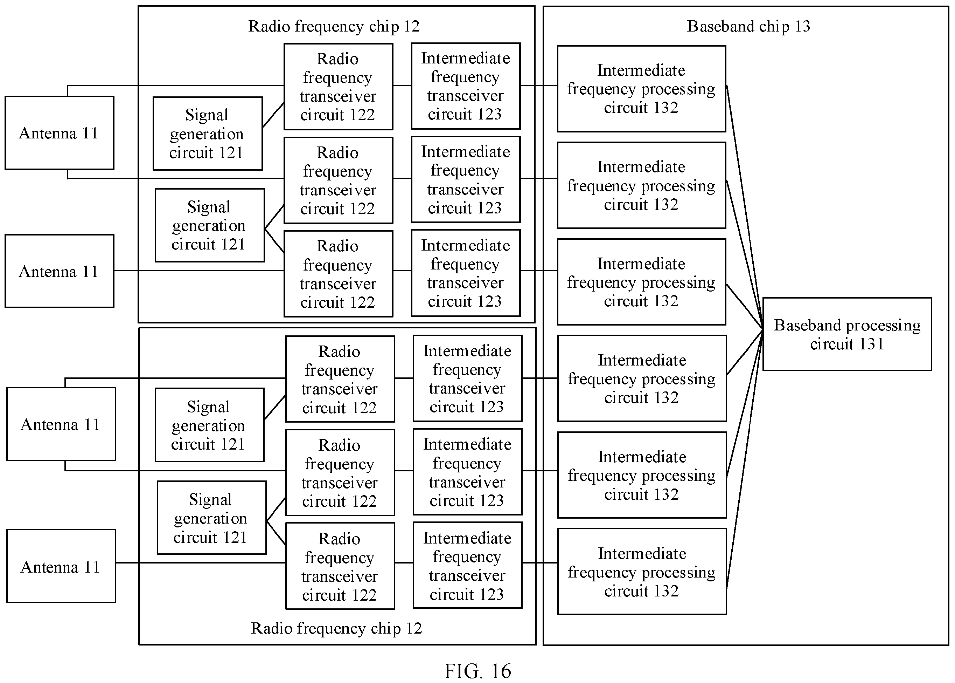

FIG. 16 is a schematic structural diagram of a WLAN device according to an embodiment of this application. As shown in FIG. 16, the WLAN device 1 includes components such as a baseband chip 13, at least two radio frequency chips 12, and at least four antennas 11. FIG. 16 is a schematic structural diagram of the WLAN device 1 including one baseband chip 13, two radio frequency chips 12, and four antennas 11, where the baseband chip 13 includes one baseband processing circuit 131 and six intermediate frequency processing circuits 132, and the radio frequency chip 12 includes two signal generation circuits 121, three radio frequency transceiver circuits 122, and three intermediate frequency transceiver circuits 123. In addition, for ease of viewing, components such as a switch circuit and a transceiving control circuit in a radio frequency chip, and a switch circuit in a baseband chip are not shown in FIG. 16. Functions of the components in the WLAN device 1 and connection relationships between the different components are as follows:

Each of the at least two radio frequency chips 12 has at least three radio frequency signal pins and at least three intermediate frequency signal pins, at least three radio frequency signal pins and at least three intermediate frequency signal pins of a same radio frequency chip 12 are in a one-to-one correspondence, and each of the at least two radio frequency chips 12 is connected to at least two antennas 11 in the at least four antennas 11.

Any radio frequency chip 12 in the at least two radio frequency chips 12 is configured to generate radio frequency local oscillator signals that belong to at least two frequency bands, and the at least three radio frequency signal pins of the any radio frequency chip 12 include a first radio frequency signal pin and a second radio frequency signal pin. The any radio frequency chip 12 is configured to: convert, based on a radio frequency local oscillator signal that belongs to one frequency band in the at least two frequency bands, a radio frequency signal received from the first radio frequency signal pin into an intermediate frequency signal, and output the intermediate frequency signal obtained through conversion from an intermediate frequency signal pin corresponding to the first radio frequency signal pin; and convert an intermediate frequency signal received from the intermediate frequency signal pin corresponding to the first radio frequency signal pin into a radio frequency signal, and output the radio frequency signal obtained through conversion from the first radio frequency signal pin.

The any radio frequency chip 12 is configured to convert, based on a radio frequency local oscillator signal that belongs to another frequency band in the at least two frequency bands, a radio frequency signal received from the second radio frequency signal pin into an intermediate frequency signal, and output the intermediate frequency signal obtained through conversion from an intermediate frequency signal pin corresponding to the second radio frequency signal pin; and convert an intermediate frequency signal received from the intermediate frequency signal pin corresponding to the second radio frequency signal pin into a radio frequency signal, and output the radio frequency signal obtained through conversion from the second radio frequency signal pin.

The baseband chip 13 has a plurality of baseband chip pins, and at least three intermediate frequency signal pins of each of the at least two radio frequency chips 12 are connected to at least three baseband chip pins of the plurality of baseband chip pins in a one-to-one correspondence manner.

The baseband chip 13 is configured to: obtain an intermediate frequency signal based on a received data signal, and provide the obtained intermediate frequency signal to the radio frequency chip 12 by using the baseband chip pin of the baseband chip 13; or obtain a data signal based on an intermediate frequency signal received from any one of the plurality of baseband chip pins, and output the obtained data signal. Operating frequency bands corresponding to the plurality of baseband chip pins is adjustable.

Connection lines between all radio frequency signal pins and corresponding antennas 11 in the WLAN device 1 do not intersect, and connection lines between all intermediate frequency signal pins and corresponding baseband chip pins in the WLAN device 1 do not intersect, and a connection line between any radio frequency signal pin in all the radio frequency signal pins and a corresponding antenna 11 does not intersect a connection line between any intermediate frequency signal pin in all the intermediate frequency signal pins and a corresponding baseband chip pin. In the WLAN device 1, a manner that the radio frequency chips 12 are disposed enables each radio frequency chip 12 to support at least two frequency bands, so that a probability that radio frequency traces between the radio frequency chips 12 and the antennas 11 intersect can be reduced. In this way, operating frequency bands corresponding to the plurality of baseband chip pins of the baseband chip 13 is adjustable, so that a probability that intermediate frequency traces between the baseband chip 13 and the radio frequency chip 12 intersect can be reduced. In addition, it is arranged that connection lines between all the radio frequency signal pins and the corresponding antennas 11 in the WLAN device 1 do not intersect, connection lines between all the intermediate frequency signal pins and the corresponding baseband chip pins in the WLAN device 1 do not intersect, and a connection line between any radio frequency signal pin in all the radio frequency signal pins and a corresponding antenna 11 does not intersect a connection line between any intermediate frequency signal pin in all the intermediate frequency signal pins and a corresponding baseband chip pin. This effectively avoids intersection of cables in the WLAN device, reduces problems related to costs of the WLAN device 1 and a signal caused by intersection of traces, improves performance of the WLAN device 1, and helps control costs of the WLAN device 1.

In an implementation, the radio frequency chip 12 in the WLAN device 1 may be the radio frequency chip 12 provided in this embodiment of this application, and the baseband chip 13 in the WLAN device 1 may be the baseband chip 13 provided in this embodiment of this application.

Optionally, in the WLAN device 1, a frequency band to which a signal output by a radio frequency signal pin of any radio frequency chip 12 belongs is adjustable. In other words, the any radio frequency chip 12 meets the following condition: A frequency band to which a radio frequency local oscillator signal used for converting a radio frequency signal received by any radio frequency signal pin of the radio frequency chip 12 into an intermediate frequency signal belongs is adjustable; and/or a frequency band to which a radio frequency local oscillator signal used for converting an intermediate frequency signal received from any intermediate frequency signal pin of any radio frequency chip 12 in the at least two radio frequency chips 12 into a radio frequency signal belongs is adjustable. In this way, flexibility of disposing the radio frequency trace and the intermediate frequency trace is further improved, and it is easier to avoid intersection of disposed radio frequency traces. For an implementation of adjusting a frequency band to which a signal output by a radio frequency signal pin belongs, refer to the implementation of adjusting an operating frequency of the radio frequency chip 12 in the foregoing embodiment describing the radio frequency chip 12. Details are not described herein again.

Optionally, each of the at least four antennas 11 is a single-band antenna. In other words, each of the at least four antennas 11 is connected to only one radio frequency signal pin. In this way, because an operating frequency band of each antenna 11 is determined, costs of the antennas 11 are relatively low, and costs of the WLAN device 1 can be reduced.

Alternatively, the at least four antennas 11 include one or more multi-band antennas, and each of the one or more multi-band antennas is configured to connect to at least two radio frequency signal pins that transmit radio frequency signals of different frequency bands. In this way, a total quantity of antennas 11 on the WLAN device 1 can be reduced, so that a size of the entire device can be reduced, and layout space of the WLAN device 1 can be optimized.

The radio frequency signal pin needs to be connected to the antenna 11 by using a radio frequency front-end. Because an operating frequency band of the radio frequency front-end is generally narrow, when the antenna 11 is a multi-band antenna 11, a same antenna 11 needs to be connected to a plurality of radio frequency front-ends of different operating frequency bands, and the plurality of radio frequency front-ends of different operating frequency bands may be connected to the same antenna 11 by using a combiner. In a signal sending process, the combiner is configured to combine signals from the plurality of radio frequency front-ends of different operating frequency bands, and then send a signal obtained through combination to the antenna 11. In a signal receiving process, the combiner is configured to divide a plurality of signals from the antenna 11 into signals of a plurality of frequency bands, and send a signal of each frequency band in the plurality of frequency bands to a radio frequency front-end of a corresponding frequency band. The radio frequency front-end integrates a PPA, a low noise amplifier (low noise amplifier, LNA), and a transmit/receive switch, and can implement amplification of a to-be-transmitted signal and a received signal, and implement a transmit/receive switching function.

Deployment locations of all the components including the antenna 11, the radio frequency chip 12, and the baseband chip 13 need to be considered in a layout of the WLAN device 1. When deployment locations of at least one of all the components including the antenna 11, the radio frequency chip 12, and the baseband chip 13 are different, locations of components other than the at least one component in the antenna 11, the radio frequency chip 12, and the baseband chip 13 may change accordingly. Therefore, there are many deployment modes that can meet a limitation of deployment locations of the antenna 11, the radio frequency chip 12, and the baseband chip 13 in the WLAN device 1 in this embodiment of this application. However, it is inconvenient to list the deployment modes one by one in this embodiment of this application. The following uses only several typical deployment modes as examples for description.

In a first deployment mode, at least two antennas 11 that are connected to a first radio frequency chip 12 and that are in the at least four antennas 11 and all radio frequency signal pins that are connected to the at least two antennas 11 connected to the first radio frequency chip 12 are sequentially arranged in a same first arrangement direction, and the first radio frequency chip 12 is one of the at least two radio frequency chips 12. Connection manners between the at least two antennas 11 connected to the first radio frequency chip 12 and all the radio frequency signal pins that are connected to the at least two antennas 11 connected to the first radio frequency chip 12 meet the following condition: When an i0^{th} radio frequency signal pin is connected to a j0^{th} antenna 11, an i1^{th} radio frequency signal pin is connected to a j1^{th} antenna 11, where the i0^{th} radio frequency signal pin and the i1^{th} radio frequency signal pin are in all the radio frequency signal pins that are connected to the at least two antennas 11 connected to the first radio frequency chip 12 and that are arranged in the first arrangement direction, and the j0^{th} antenna and the j1^{th} antenna are in the at least two antennas 11 that are connected to the first radio frequency chip 12 and that are arranged in the first arrangement direction. i1 is greater than i0, j1 is greater than or equal to j0, and i0, i1, j0, and j1 are all positive integers.

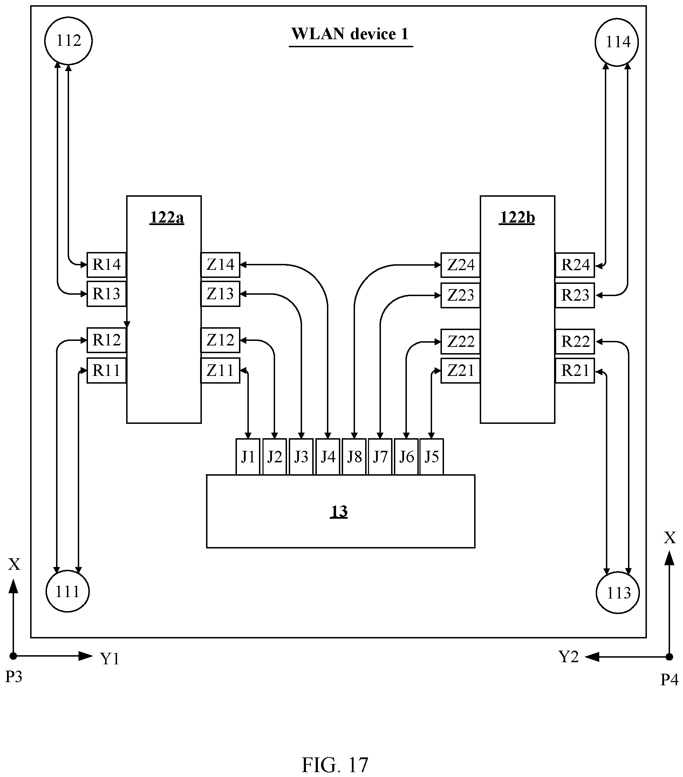

For example, as shown in FIG. 17, four antennas 111 to 114 and two radio frequency chips 122a and 122b are disposed on the WLAN device 1. The antennas 111 to 114 are all dual-band antennas, the antennas 111 and 112 are connected to the radio frequency chip 122a, and the antennas 113 and 114 are connected to the radio frequency chip 122b. The antennas 111 and 112 are sequentially arranged on the WLAN device in an X direction shown in FIG. 17, radio frequency signal pins R11 to R14 connected to the antennas 111 and 112 are also sequentially arranged in the X direction, the antennas 113 and 114 are sequentially arranged on the WLAN device 1 in the X direction, and radio frequency signal pins R21 to R24 connected to the antennas 113 and 114 are also sequentially arranged in the X direction.

It can be seen from FIG. 17 that the antenna 111 is connected to the radio frequency signal pins R11 and R12 separately, and the antenna 112 is connected to the radio frequency signal pins R13 and R14 separately. In other words, connection manners between the antennas 111 and 112 and the radio frequency signal pins R11 to R14 meet the following condition: When an i0^{th} radio frequency signal pin that is in the radio frequency signal pins R11 to R14 and that is arranged in the X direction is connected to a j0^{th} antenna that is in the antennas 111 and 112 and that is arranged in the X direction, an i1^{th} radio frequency signal pin, in the radio frequency signal pins R11 to R14, arranged in the X direction is connected to a j1^{th} antenna, in the antennas 111 and 112, arranged in the X direction.

In addition, the antenna 113 is connected to the radio frequency signal pins R21 and R22 separately, and the antenna 114 is connected to the radio frequency signal pins R23 and R24 separately. In other words, connection manners between the antennas 113 and 114 and the radio frequency signal pins R21 to R24 meet the following condition: When an i0^{th} radio frequency signal pin that is in the radio frequency signal pins R21 to R24 and that is arranged in the X direction is connected to a j0^{th} antenna that is in the antennas 113 and 114 and that is arranged in the X direction, an i1^{th} radio frequency signal pin that is in the radio frequency signal pins R21 to R24 and that is arranged in the X direction is connected to a j1^{th} antenna that is in the antennas 113 and 114 and that is arranged in the X direction.

i1 is greater than i0, j1 is greater than or equal to j0, both i0 and i1 are positive integers less than 5, and both j0 and j1 are positive integers less than 3.

When the antenna and the radio frequency signal pin on the WLAN device 1 are deployed in the first deployment mode, it can be ensured that any two radio frequency traces on the WLAN device 1 do not intersect.

In the second deployment mode, either of a forward extension line and a reverse extension line of an arrangement direction of at least two antennas 11 that are connected to a second radio frequency chip 12 and that are in the at least four antennas 11 intersects, at a first intersection, either of a forward extension line and a reverse extension line of an arrangement direction of all radio frequency signal pins that are connected to the at least two antennas 11 connected to the second radio frequency chip 12, and the second radio frequency chip 12 is one of the at least two radio frequency chips 12. In this case, connection manners between the at least two antennas 11 connected to the second radio frequency chip 12 and all the radio frequency signal pins that are connected to the at least two antennas 11 connected to the second radio frequency chip 12 meet the following condition: When an i2^{th} radio frequency signal pin closest to the first intersection is connected to a j2^{th} antenna 11 to the first intersection, an i3^{th} radio frequency signal pin closest to the first intersection is connected to a j3^{th} antenna 11 to the first intersection, where the i2^{th} radio frequency signal pin and the i3^{th} radio frequency signal pin are in all the radio frequency signal pins that are connected to the at least two antennas 11 connected to the second radio frequency chip 12, and the j2^{th} antenna 11 and the j3^{th} antenna 11 are in the at least two antennas 11 connected to the second radio frequency chip 12. i3 is greater than i2, j3 is greater than or equal to j2, and i2, i3, j2, and j3 are all positive integers.

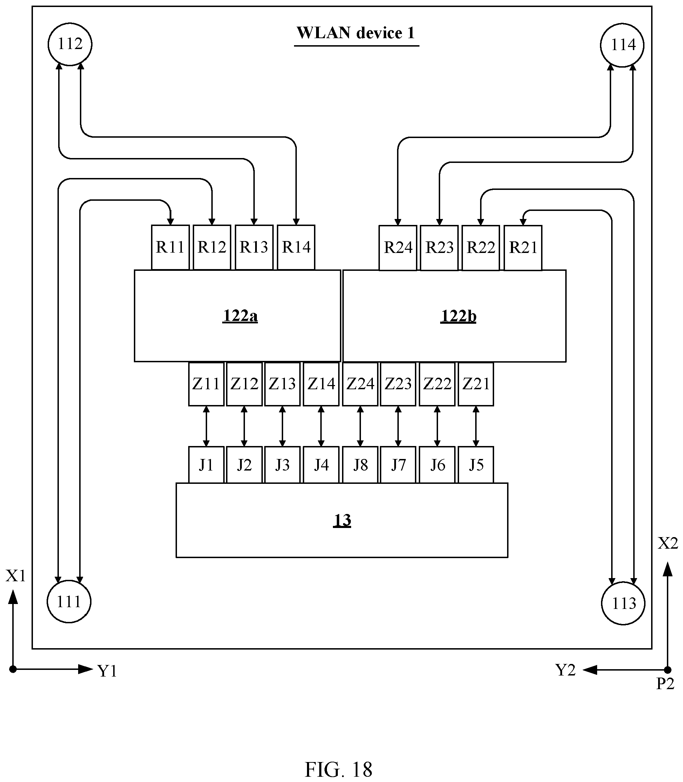

For example, as shown in FIG. 18, four antennas 111 to 114 and two radio frequency chips 122a and 122b are disposed on the WLAN device 1. The antennas 111 to 114 are all dual-band antennas, the antennas 111 and 112 are connected to the radio frequency chip 122a, and the antennas 113 and 114 are connected to the radio frequency chip 122b. The antennas 111 and 112 are sequentially arranged on the WLAN device 1 in a X1 direction shown in FIG. 18, the radio frequency signal pins R11 to R14 connected to the antennas 111 and 112 are also sequentially arranged in a Y1 direction, the antennas 113 and 114 are sequentially arranged on the WLAN device 1 in a X2 direction shown in FIG. 18, and the radio frequency signal pins R21 to R24 connected to the antennas 113 and 114 are also sequentially arranged in the Y2 direction. A first intersection P1 exists between a reverse extension line of the X1 direction and a reverse extension line of the Y1 direction, and the antennas 111 and 112 and the radio frequency signal pins R11 to R14 are all located on one side of the first intersection P1. A first intersection P2 exists between a reverse extension line of the X2 direction and a reverse extension line of the Y2 direction, and the antennas 113 and 114 and the radio frequency signal pins R21 to R24 are all located on one side of the first intersection P2.

It can be seen from FIG. 18 that, the antenna 111 is connected to the radio frequency signal pins R11 and R12 separately, and the antenna 112 is connected to the radio frequency signal pins R13 and R14 separately. In other words, connection manners between the antennas 111 and 112 and the radio frequency signal pins R11 to R14 meet the following condition: When an i2^{th} radio frequency signal pin that is in the radio frequency signal pins R11 to R14 and that is closest to the first intersection P1 is connected to a j2^{th} antenna that is in the antennas 111 and 112 and that is closest to the first intersection P1, an i3^{th} radio frequency signal pin that is in the radio frequency signal pins R11 to R14 and that is closest to the first intersection P1 is connected to a j3^{th} antenna that is in the antennas 111 and 112 and that is closest to the first intersection P1.

In addition, the antenna 113 is connected to the radio frequency signal pins R21 and R22 separately, and the antenna 114 is connected to the radio frequency signal pins R23 and R24 separately. In other words, connection manners between the antennas 113 and 114 and the radio frequency signal pins R21 to R24 meet the following condition: When an i2^{th} radio frequency signal pin that is in the radio frequency signal pins R21 to R24 and that is closest to the first intersection P2 is connected to a j2^{th} antenna that is in the antennas 113 and 114 and that is closest to the first intersection P2, an i3^{th} radio frequency signal pin that is in the radio frequency signal pins R21 to R24 and that is closest to the first intersection P2 is connected to a j3^{th} antenna that is in the antennas 113 and 114 and that is closest to the first intersection P2.

i3 is greater than i2, j3 is greater than or equal to j2, both i2 and i3 are positive integers less than 5, and both j2 and j3 are positive integers less than 3.

When connection manners between the antennas and the radio frequency signal pins on the WLAN device 1 all meet the condition, it can be ensured that any two radio frequency traces on the WLAN device 1 do not intersect.

In a third deployment mode, either of a forward extension line and a reverse extension line of an arrangement direction of all intermediate frequency signal pins of a third radio frequency chip 12 intersects, at a second intersection, either of a forward extension line and a reverse extension line of an arrangement direction of at least three baseband chip pins connected to all the intermediate frequency signal pins of the third radio frequency chip 12, and the third radio frequency chip is one of the at least two radio frequency chips 12. In this case, connection manners between all the intermediate frequency signal pins of the third radio frequency chip 12 and the at least three baseband chip pins connected to all the intermediate frequency signal pins of the third radio frequency chip 12 meet the following condition: When an i4^{th} intermediate frequency signal pin closest to the second intersection is connected to a j4^{th} baseband chip pin closest to the second intersection, an i5^{th} intermediate frequency signal pin closest to the second intersection is connected to a j5^{th} baseband pin closest to the second intersection, where the i4^{th} intermediate frequency signal pin and the i5^{th} intermediate frequency signal pin are in all the intermediate frequency signal pins of the third radio frequency chip 12, and the j4^{th} baseband chip pin and the j5^{th} baseband chip pin are in the at least three baseband chip pins connected to all the intermediate frequency signal pins of the third radio frequency chip 12. i5 is greater than i4, j5 is greater than or equal to j4, and i4, i5, j4, and j5 are all positive integers.

For example, as shown in FIG. 17, two radio frequency chips 122a and 122b and one baseband chip 13 are disposed on the WLAN device 1, and the radio frequency chips 122a and 122b each are connected to the baseband chip 13. Intermediate frequency signal pins Z11 to Z14 of the radio frequency chip 122a are sequentially arranged on the WLAN device 1 in an X direction shown in FIG. 17, and baseband chip pins J1 to J4 of the baseband chip 13 are sequentially arranged on the WLAN device 1 in a Y1 direction shown in FIG. 17. Intermediate frequency signal pins Z21 to Z24 of the radio frequency chip 122b are sequentially arranged on the WLAN device 1 in the X direction shown in FIG. 17, and baseband chip pins J5 to J8 of the baseband chip 13 are sequentially arranged on the WLAN device 1 in a Y2 direction shown in FIG. 17. A reverse extension line of the X direction intersects a reverse extension line of the Y1 direction at a second intersection P3, and the intermediate frequency signal pins Z11 to Z14 and the baseband chip pins J1 to J4 are all located on one side of the second intersection P3. A reverse extension line of the X direction intersects a reverse extension line of the Y2 direction at a second intersection P4, and the intermediate frequency signal pins Z21 to Z24 and the baseband chip pins J5 to J8 are all located on one side of the second intersection P4.

It can be learned from FIG. 17 that the intermediate frequency signal pins Z11 to Z14 of the radio frequency chip 122a are connected to the baseband chip pins J1 to J4 of the baseband chip 13 in a one-to-one correspondence manner, and the intermediate frequency signal pins Z21 to Z24 of the radio frequency chip 122b are connected to the baseband chip pins J5 to J8 of the baseband chip 13 in a one-to-one correspondence manner. In other words, connection manners between the intermediate frequency signal pins Z11 to Z14 of the radio frequency chip 122a and the baseband chip pins J1 to J4 of the baseband chip 13 meet the following condition: When an i2^{th} intermediate frequency signal pin that is in the intermediate frequency signal pins Z11 to Z14 and that is closest to the second intersection P3 is connected to a j2^{th} baseband chip pin that is in the baseband chip pins J1 to J4 and that is closest to the second intersection P3, an i3^{th} intermediate frequency signal pin that is in the intermediate frequency signal pins Z11 to Z14 and that is closest to the second intersection P3 is connected to a j3^{th} baseband chip pin that is the baseband chip pins J1 to J4 and that is closest to the second intersection P3.

In addition, connection manners between the intermediate frequency signal pins Z21 to Z24 and the baseband chip pins J5 to J8 meet the following condition: When an i2^{th} intermediate frequency signal pin that is in the intermediate frequency signal pins Z21 to Z24 and that is closest to the second intersection P4 is connected to a j2^{th} baseband chip pin that is in the baseband chip pins J5 to J8 and that is closest to the second intersection P4, an i3^{th} intermediate frequency signal pin that is in the intermediate frequency signal pins Z21 to Z24 and that is closest to the second intersection P4 is connected to a j3^{th} baseband chip pin that is in the baseband chip pins J5 to J8 and that is closest to the second intersection P4.

i5 is greater than i4, j5 is greater than or equal to j4, both i4 and i5 are positive integers less than 5, and both j4 and j5 are positive integers less than 3.

When connection manners between the baseband chip pins and connection manners between the radio frequency signal pins on the WLAN device 1 all meet the condition, it can be ensured that any two intermediate frequency traces on the WLAN device 1 do not intersect.

In a fourth deployment mode, all intermediate frequency signal pins of a fourth radio frequency chip 12 and at least three baseband chip pins connected to all the intermediate frequency signal pins of the fourth radio frequency chip 12 are sequentially arranged in a same second arrangement direction, where the fourth radio frequency chip 12 is one of the at least two radio frequency chips 12. Connection manners between all the intermediate frequency signal pins of the fourth radio frequency chip 12 and the at least three baseband chip pins connected to all the intermediate frequency signal pins of the fourth radio frequency chip 12 meet the following condition: When an i6^{th} intermediate frequency signal pin is connected to a j6^{th} baseband chip pin, an i7^{th} intermediate frequency signal pin is connected to a j7^{th} baseband chip pin, where the i6^{th} intermediate frequency signal pin and the i7^{th} intermediate frequency signal pin are in all the intermediate frequency signal pins of the fourth radio frequency chip 12 that are arranged in the second arrangement direction, and the j6^{th} baseband chip pin and the j7^{th} baseband chip pin are in the at least three baseband chip pins that are connected to all the intermediate frequency signal pins of the fourth radio frequency chip 12 and that are arranged in the second arrangement direction. i7 is greater than i6, j7 is greater than or equal to j6, and i6, i7, j6, and j7 are all positive integers.

For example, as shown in FIG. 18, the two radio frequency chips 122a and 122b and one baseband chip 13 are disposed on the WLAN device 1, and the radio frequency chips 122a and 122b each are connected to the baseband chip 13. The intermediate frequency signal pins Z11 to Z14 of the radio frequency chip 122a and the baseband chip pins J1 to J4 of the baseband chip 13 are sequentially arranged on the WLAN device 1 according to a Y1 direction shown in FIG. 18. The intermediate frequency signal pins Z21 to Z24 of the radio frequency chip 122b and the baseband chip pins J5 to J8 of the baseband chip 13 are sequentially arranged on the WLAN device 1 according to a Y2 direction shown in FIG. 18.

It can be learned from FIG. 18 that the intermediate frequency signal pins Z11 to Z14 of the radio frequency chip 122a are connected to the baseband chip pins J1 to J4 of the baseband chip 13 in a one-to-one correspondence manner, and the intermediate frequency signal pins Z21 to Z24 of the radio frequency chip 122b are connected to the baseband chip pins J5 to J8 of the baseband chip 13 in a one-to-one correspondence manner. In other words, connection manners between the intermediate frequency signal pins Z11 to Z14 of the radio frequency chip 122a and the baseband chip pins J1 to J4 of the baseband chip 13 meet the following condition: When an i6^{th} intermediate frequency signal pin in the intermediate frequency signal pins Z11 to Z14 of the radio frequency chip 122a that are arranged in the Y direction is connected to a j6^{th} baseband chip pin in the baseband chip pins J1 to J4 of the baseband chip 13 that are arranged in the Y direction, an i7^{th} intermediate frequency signal pin in the intermediate frequency signal pins Z11 to Z14 of the radio frequency chip 122a that are arranged in the Y direction is connected to a j7^{th} baseband chip pin in the baseband chip pins J1 to J4 of the baseband chip 13 that are arranged in the Y direction.

In addition, connection manners between the intermediate frequency signal pins Z21 to Z24 of the radio frequency chip 122b and the baseband chip pins J5 to J8 of the baseband chip 13 meet the following condition: When an i6^{th} intermediate frequency signal pin in the intermediate frequency signal pins Z21 to Z24 of the radio frequency chip 122b that are arranged in the Y direction is connected to a j6^{th} baseband chip pin in the baseband chip pins J5 to J8 of the baseband chip 13 that are arranged in the Y direction, an i7^{th} intermediate frequency signal pin in the intermediate frequency signal pins Z21 to Z24 of the radio frequency chip 122b that are arranged in the Y direction is connected to a j7^{th} baseband chip pin in the baseband chip pins J5 to J8 of the baseband chip 13 that are arranged in the Y direction. When connection manners between the baseband chip pins and connection manners between the radio frequency signal pins on the WLAN device 1 all meet the condition, it can be ensured that any two intermediate frequency traces on the WLAN device 1 do not intersect.

It can be learned from the foregoing description that the first deployment mode and the second deployment mode describe a connection manner between a radio frequency signal pin and an antenna, and the third deployment mode and the fourth deployment mode describe a connection manner between an intermediate frequency signal pin and a baseband chip pin. It should be noted that, when the connection manner between the radio frequency signal pin and the antenna is the first deployment mode or the second deployment mode, the connection manner between the intermediate frequency signal pin and the baseband chip pin may be either of the third deployment mode and the fourth deployment mode, or may be another deployment mode. This is not specifically limited in this embodiment of this application. Similarly, when the connection manner between the intermediate frequency signal pin and the baseband chip pin is the third deployment mode or the fourth deployment mode, the connection manner between the radio frequency signal pin and the antenna may be either of the first deployment mode and the second deployment mode, or may be another deployment mode. This is not specifically limited in this embodiment of this application. In addition, at least two signal generation circuits 121 in the WLAN device 1 may generate radio frequency local oscillator signals of a same frequency band based on a clock signal from a same source. In other words, the at least two signal generation circuits 121 that generate the radio frequency local oscillator signals of the same frequency band have a same clock source. In this way, it can be ensured that at least two radio frequency chips 12 in the WLAN device 1 in a multiple-input multiple-output mode have a same clock source, so that clock delays and phase differences of the at least two radio frequency chips 12 can be basically consistent. In this way, it can be ensured that the at least two radio frequency chips 12 implement synchronous sending and receiving of signals of a same frequency.

In an implementation, the at least two signal generation circuits 121 in the at least two radio frequency chips 12 generate, based on clock signals generated by a same clock source, radio frequency local oscillator signals that belong to a same frequency band, so as to ensure that at least two signal generation circuits 121 that are in the at least two radio frequency chips 12 and that generate radio frequency local oscillator signals that belong to a same frequency band have a same clock source.

Optionally, the clock source may be a clock circuit. The WLAN device 1 may further include a clock circuit. The clock circuit is configured to generate a clock signal, and provide the clock signal for the signal generation circuit 121 in the radio frequency chip 12, so that the signal generation circuit 121 generates a radio frequency local oscillator signal based on the clock signal. The clock circuit may be disposed in the radio frequency chip 12, or may be disposed outside the radio frequency chip. In addition, the clock signals generated by the clock circuit in the radio frequency chip 12 may be used by another circuit in the radio frequency chip 12, or may be used by a circuit in another chip in the WLAN device 1. This is not specifically limited in this embodiment of this application. For example, a clock circuit is disposed on a PCB of the WLAN device 1, and clock signals generated by the clock circuit are separately provided to the signal generation circuit 121 in the radio frequency chip 122a and the radio frequency chip 122b for use.

In an implementation, the clock circuit includes a crystal oscillator, for example, a crystal oscillator XO. The crystal oscillator can generate a clock signal through vibration. In addition, the crystal oscillator may be an oscillator or a crystal. When the crystal oscillator is a crystal, the WLAN device 1 may further include a drive circuit 125, and the drive circuit 125 is configured to drive the crystal to vibrate. The crystal oscillator may also be disposed on the radio frequency chip 12. Similarly, the drive circuit may also be disposed on the radio frequency chip 12. This is not specifically limited in this embodiment of this application.

In addition, to ensure signal quality of a clock signal provided to the signal generation circuit 121, in a process of providing the clock signal to the signal generation circuit 121, a signal amplification circuit is further used to process the clock signal.

In addition, when each radio frequency chip 12 supports at least two frequency bands, the WLAN device 1 may include at least two clock circuits corresponding to the at least two frequency bands, and each clock circuit is configured to generate a clock signal required for a radio frequency local oscillator signal of a corresponding frequency band. Alternatively, the WLAN device 1 may include a clock circuit, and the clock circuit may provide a generated clock signal for all signal generation circuits 121 in the at least two radio frequency chips 12. In this way, all signal generation circuits 121 in the at least two radio frequency chips 12 generate radio frequency local oscillator signals based on clock signals generated by a same clock source, so that a clock delay and a phase difference of a signal received or sent by each radio frequency chip 12 can be further reduced, and performance of the WLAN device 1 is further ensured.

Further, to ensure a same clock source effect, delays of the clock signal based on which the at least two signal generation circuits 121 in the WLAN device 1 generate radio frequency local oscillator signals that belong to a same frequency band may be kept consistent on a path for transmitting the clock signal to the corresponding signal generation circuit 121, so as to further reduce a clock delay and a phase difference of a signal received or sent by each radio frequency chip 12.

In an implementation, when the clock signals based on which the at least two signal generation circuits 121 generate radio frequency local oscillator signals that belong to a same frequency band have a same clock source, circuits that are passed when a same clock source transmits clock signals generated by the same clock source to each of the at least two signal generation circuits 121 have same impact on the clock signals generated by the same clock source.

Optionally, quantities of circuits on at least two paths on which a signal is transmitted from the clock source to the at least two signal generation circuits 121 may be set equal, and circuit parameters of the circuits that have a same function on the at least two paths are correspondingly the same. For example, when circuits that are passed when a clock source transmits a clock signal to a signal generation circuit 121 include one signal driving circuit and N signal amplification circuits, it may be arranged that the clock signal passes the signal driving circuit on at least two paths, and the at least two paths all pass the N signal amplification circuits. In addition, circuit parameters (for example, amplification stages of the signal amplification circuits are the same, and amplification multiples of the stages are correspondingly the same) of the N signal amplification circuits that are passed by the at least two paths are correspondingly the same.

In another implementation, radio frequency traces that are passed when the same clock source transmits the clock signals generated by the same clock source to each of the at least two signal generation circuits 121 are of a same length. In this way, it can be maximally ensured that losses of a signal on the radio frequency traces are the same. The WLAN device 1 includes at least two radio frequency chips 12, each radio frequency chip 12 supports at least two operating frequency bands, and the WLAN device 1 needs to implement synchronous sending and receiving of signals of a same frequency during operation. Therefore, the WLAN device 1 may further control components that are in the WLAN device 1 and that process signals of a same frequency band to synchronously send and receive a signal. In addition, because the WLAN device 1 includes at least two radio frequency chips 12, synchronization sending and receiving of the at least two radio frequency chips 12 may be scheduled by the baseband chip 13 in a centralized manner.

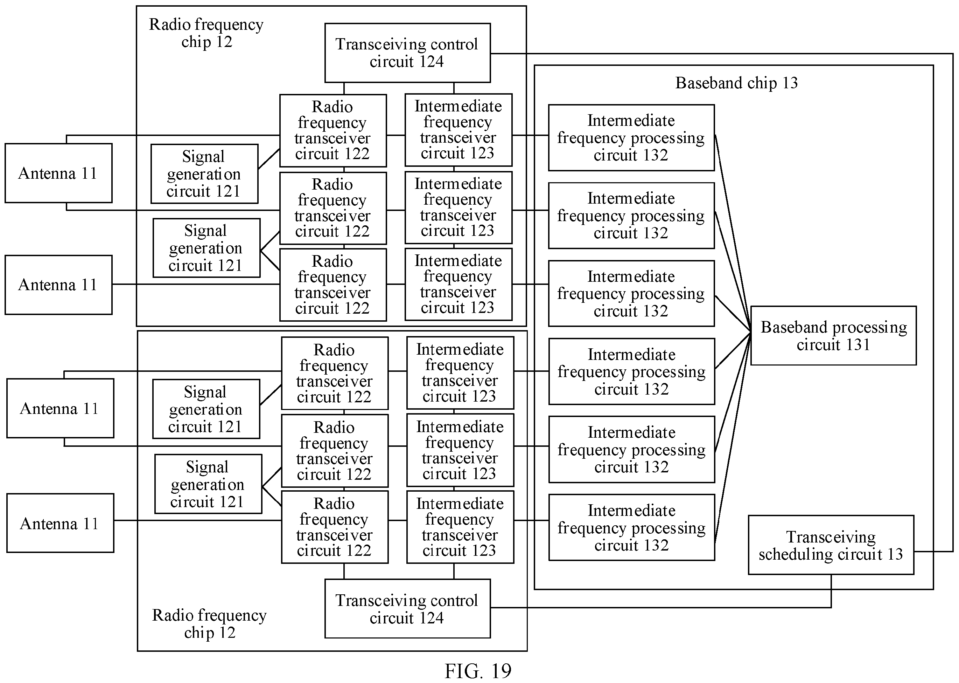

In an implementation, as shown in FIG. 19, each radio frequency chip 12 in the at least two radio frequency chips 12 further includes a transceiving control circuit 124. The transceiving control circuit 124 in any radio frequency chip in the at least two radio frequency chips 12 is configured to control: an intermediate frequency transceiver circuit 123 and at least one radio frequency transceiver circuit 122 in at least three radio frequency transceiver circuits 122 in the any radio frequency chip 12 to synchronously send and receive a signal, where the at least one radio frequency transceiver circuit 122 receives a radio frequency local oscillator signal of a same frequency band, and the intermediate frequency transceiver circuit 123 corresponds to the at least one radio frequency transceiver circuit 122. In addition, as shown in FIG. 19, the baseband chip 13 includes a transceiving scheduling circuit 133. The transceiving scheduling circuit 133 is configured to schedule transceiving control circuits 124 in the at least two radio frequency chips 12 in a centralized manner.

The transceiving scheduling circuit 133 and the transceiving control circuit 124 in each radio frequency chip 12 may communicate with each other, for example, communicate with each other through a bus. The transceiving scheduling circuit 133 may send a scheduling signal to the transceiving control circuit 124 in each radio frequency chip 12. The transceiving control circuit 124 in each radio frequency chip 12 is configured to control, based on the scheduling signal, circuits of a same operating frequency band in the radio frequency chip 12 to perform synchronous sending and receiving.

In another possible implementation, each of the at least two radio frequency chips 12 further includes at least two transceiving control circuits 124 corresponding to at least two frequency bands, and each of at least two transceiving control circuits 124 in any radio frequency chip 12 in the at least two radio frequency chips 12 is configured to: control an intermediate frequency transceiver circuit 123 and at least one radio frequency transceiver circuit 122 in the at least three radio frequency transceiver circuits 122 in the any radio frequency chip 12 to synchronously send and receive a signal, where the at least one radio frequency transceiver circuit 122 receives a radio frequency local oscillator signal of a corresponding frequency band, and the intermediate frequency transceiver circuit 123 corresponds to the at least one radio frequency transceiver circuit 122. In addition, the baseband chip 13 includes at least two transceiving scheduling circuits 133 corresponding to the at least two frequency bands, and any transceiving scheduling circuit 133 in the at least two transceiving scheduling circuits 133 is configured to schedule, in a centralized manner, a transceiving control circuit 124 that is in the at least two radio frequency chips 12 and that corresponds to a same frequency band as the any transceiving scheduling circuit 133.

The transceiving scheduling circuit 133 corresponding to any frequency and the transceiving control circuit 124 corresponding to the any frequency in each radio frequency chip 12 may communicate with each other, for example, communicate with each other through a bus. The transceiving scheduling circuit 133 corresponding to the any frequency may send a scheduling signal to the transceiving control circuit 124 corresponding to the any frequency in each radio frequency chip 12. The transceiving control circuit 124 corresponding to the any frequency in each radio frequency chip 12 is configured to control, based on the scheduling signal, circuits that are in the radio frequency chip 12 and whose operating frequency bands are the any frequency to perform synchronous sending and receiving.

For an implementation process in which the transceiving control circuit 124 controls synchronous sending and receiving in the foregoing two implementations, refer to the related descriptions in the radio frequency chip 12. Details are not described herein again.

In addition, in the another possible implementation, a frequency band corresponding to each of the at least two transceiving scheduling circuits 133 may also be adjusted, and each of the at least two transceiving scheduling circuits 133 can communicate with all transceiving control circuits 124 in each of the at least two radio frequency chips 12. In this way, decoupling between a scheduling signal and a radio frequency channel can be implemented, and an operation manner of each component in the WLAN device 1 can be flexibly adjusted based on an application requirement.

It should be noted that structures of the at least two radio frequency chips 12 in the WLAN device 1 may be the same or different. When structures of the at least two radio frequency chips 12 are the same, the radio frequency chips 12 may be chips produced in batches, so that a manufacturing process of the WLAN device 1 can be simplified.

It can be learned from the foregoing description that a frequency band to which the radio frequency local oscillator signal generated by the signal generation circuit 121 belongs is adjusted, so that the radio frequency chip 12 can be applied to different application scenarios. Correspondingly, the WLAN device 1 can be applied to different application scenarios. The following describes an operation principle of the WLAN device 1 by using two typical scenarios as examples.

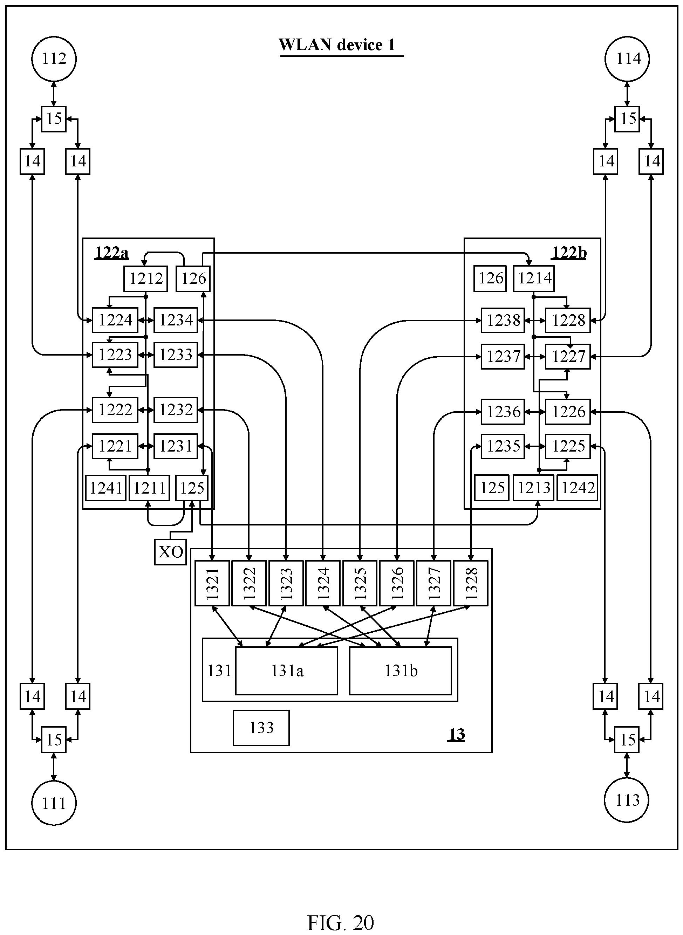

In a first application scenario, as shown in FIG. 20, the WLAN device 1 includes four dual-band antennas 111 to 114, two radio frequency chips 122a and 122b, and one baseband chip 13. The dual-band antennas 111 to 114 are located at four corners on the PCB of the WLAN device 1, the radio frequency chip 122a and the radio frequency chip 122b are respectively disposed on the left side and the right side of the central axis of the WLAN device 1, and the baseband chip 13 is disposed on the central axis of the WLAN device 1.

The radio frequency chip 122a includes two signal generation circuits 1211 and 1212, four radio frequency transceiver circuits 1221 to 1224, four intermediate frequency transceiver circuits 1231 to 1234 that are connected to the four radio frequency transceiver circuits in a one-to-one correspondence manner, four radio frequency signal pins (not shown in FIG. 20), four intermediate frequency signal pins that are in a one-to-one correspondence with the four radio frequency signal pins, and one transceiving control circuit 1241. The radio frequency chip 122b includes two signal generation circuits 1213 and 1214, four radio frequency transceiver circuits 1225 to 1228, four intermediate frequency transceiver circuits 1235 to 1238 that are connected to the four radio frequency transceiver circuits in a one-to-one correspondence manner, four radio frequency signal pins (not shown in FIG. 20), four intermediate frequency signal pins that are in a one-to-one correspondence with the four radio frequency signal pins, and one transceiving control circuit 1242. A radio frequency transceiver circuit and a corresponding intermediate frequency transceiver circuit have a same operating frequency band, and signals output by a radio frequency signal pin and a corresponding intermediate frequency signal pin belong to a same frequency band. The four radio frequency transceiver circuits of the radio frequency chip 122a are connected to the four radio frequency signal pins of the radio frequency chip 122a in a one-to-one correspondence manner, and the four intermediate frequency transceiver circuits of the radio frequency chip 122a are connected to the four intermediate frequency signal pins of the radio frequency chip 122a in a one-to-one correspondence manner. The four radio frequency transceiver circuits of the radio frequency chip 122b are connected to the four radio frequency signal pins of the radio frequency chip 122b in a one-to-one correspondence manner, and the four intermediate frequency transceiver circuits of the radio frequency chip 122b are connected to the four intermediate frequency signal pins of the radio frequency chip 122b in a one-to-one correspondence manner.

A radio frequency local oscillator signal generated by the signal generation circuit 1211 belongs to a 2.4 GHz frequency band, and the signal generation circuit 1211 is configured to provide the radio frequency local oscillator signal belonging to the 2.4 GHz frequency band for the radio frequency transceiver circuits 1221 and 1223. A radio frequency local oscillator signal generated by the signal generation circuit 1212 belongs to a 5 GHz frequency band, and the signal generation circuit 1212 is configured to provide the radio frequency local oscillator signal belonging to the 5 GHz frequency band for the radio frequency transceiver circuits 1222 and 1224. In this way, two radio frequency channels in the radio frequency chip 122a support sending and receiving of a 2.4 GHz signal, and two radio frequency channels support sending and receiving of a 5 GHz signal

Similarly, a radio frequency local oscillator signal generated by the signal generation circuit 1213 belongs to the 2.4 GHz frequency band, and the signal generation circuit 1213 is configured to provide the radio frequency local oscillator signal belonging to the 2.4 GHz frequency band for the radio frequency transceiver circuits 1225 and 1227. A radio frequency local oscillator signal generated by the signal generation circuit 1214 belongs to the 5 GHz frequency band, and the signal generation circuit 1214 is configured to provide the radio frequency local oscillator signal belonging to the 5 GHz frequency band for the radio frequency transceiver circuits 1226 and 1228. In this way, two radio frequency channels in the radio frequency chip 122b support sending and receiving of a 2.4 GHz signal, and two radio frequency channels support sending and receiving of a 5 GHz signal.

In addition, the transceiving control circuit 1241 in the radio frequency chip 122a is configured to: control radio frequency channels that are in the radio frequency chip 122a and that support sending and receiving of a 2.4 GHz signal to synchronously send and receive a signal, and control radio frequency channels that are in the radio frequency chip 122a and that support sending and receiving of a 5 GHz signal to synchronously send and receive a signal. In addition, the transceiving control circuit 1242 in the radio frequency chip 122b is configured to: control radio frequency channels that are in the radio frequency chip 122b and that support sending and receiving of a 2.4 GHz signal to synchronously send and receive a signal, and control radio frequency channels that are in the radio frequency chip 122b and that support sending and receiving of a 5 GHz signal to synchronously send and receive a signal.

The baseband chip 13 includes one baseband processing circuit 131, eight intermediate frequency processing circuits 1321 to 1328, eight baseband chip pins (not shown in FIG. 20) that are connected to the eight intermediate frequency processing circuits in a one-to-one correspondence manner, and one transceiving scheduling circuit 133. Each of the eight intermediate frequency processing circuits 1321 to 1328 is connected to the baseband processing circuit 131. In addition, resources of the baseband processing circuit 131 are combined into two parts related to 131a and 131b. The intermediate frequency processing circuits 1321, 1323, 1326, and 1328 are connected to 131a, and the intermediate frequency processing circuits 1322, 1324, 1325, and 1327 are connected to 131b. Signals output by the intermediate frequency processing circuits 1321, 1323, 1326, and 1328 and corresponding baseband chip pins belong to the 2.4 GHz frequency band, and signals output by the intermediate frequency processing circuits 1322, 1324, 1325, and 1327 and corresponding baseband chip pins belong to the 5 GHz frequency band. The transceiving scheduling circuit 133 is separately connected to 131a and 131b of the baseband processing circuit 131, and the transceiving control circuit 1241 in the radio frequency chip 122a is connected to the transceiving control circuit 1242 in the radio frequency chip 122b (for ease of viewing, a connection manner thereof is not shown). The transceiving scheduling circuit 133 is configured to send a scheduling signal to each of the transceiving control circuit 1241 and the transceiving control circuit 1242, to control a radio frequency channel that is in the radio frequency chip 122a and that supports sending and receiving of a 2.4 GHz signal and a radio frequency channel that is in the radio frequency chip 122b and that supports sending and receiving of a 2.4 GHz signal to synchronously send and receive a signal; and control a radio frequency channel that is in the radio frequency chip 122a and that supports sending and receiving of a 5 GHz signal and a radio frequency channel that is in the radio frequency chip 122b and that supports sending and receiving of a 5 GHz signal to synchronously send and receive a signal. In addition, the transceiving scheduling circuit 133 is controlled by the baseband processing circuit 131.

As shown in FIG. 20, the dual-band antenna 111 is connected, by using a radio frequency front-end 14 whose operating frequency band is 2.4 GHz, to a radio frequency signal pin connected to the radio frequency transceiver circuit 1221, and the dual-band antenna 111 is connected, by using a radio frequency front-end 14 whose operating frequency band is 5 GHz, to a radio frequency signal pin connected to the radio frequency transceiver circuit 1222. The dual-band antenna 112 is connected, by using the radio frequency front-end 14 whose operating frequency band is 2.4 GHz, to a radio frequency signal pin connected to the radio frequency transceiver circuit 1223, and the dual-band antenna 112 is connected, by using the radio frequency front-end 14 whose operating frequency band is 5 GHz, to a radio frequency signal pin connected to the radio frequency transceiver circuit 1224. The dual-band antenna 113 is connected, by using the radio frequency front-end 14 whose operating frequency band is 2.4 GHz, to a radio frequency signal pin connected to the radio frequency transceiver circuit 1225, and the dual-band antenna 113 is connected, by using the radio frequency front-end 14 whose operating frequency band is 5 GHz, to a radio frequency signal pin connected to the radio frequency transceiver circuit 1226. The dual-band antenna 114 is connected, by using the radio frequency front-end 14 whose operating frequency band is 2.4 GHz, to a radio frequency signal pin connected to the radio frequency transceiver circuit 1227, and the dual-band antenna 114 is connected, by using the radio frequency front-end 14 whose operating frequency band is 5 GHz, to a radio frequency signal pin connected to the radio frequency transceiver circuit 1228. In addition, each dual-band antenna is connected to two radio frequency front-ends 14 by using a combiner 15. The radio frequency front-end 14 connected to each dual-band antenna is disposed close to the dual-band antenna connected to the radio frequency front-end 14, to reduce a signal loss between the radio frequency front-end 14 and the antenna. In addition, how close the radio frequency front-end 14 is to the antenna may be considered as a minimum distance defined in a manufacturing process.

In addition, as shown in FIG. 20, a passive crystal XO is further disposed on the PCB of the WLAN device 1. The radio frequency chip 122a further includes a drive circuit 125 and an amplification circuit 126. The drive circuit 125 is configured to drive the crystal XO to vibrate. The amplification circuit 126 is configured to amplify a clock signal transmitted by the crystal to the signal generation circuit 1212 and the signal generation circuit 1214. In addition, it can be learned from FIG. 20 that the radio frequency chip 122b also includes a drive circuit 125 and an amplification circuit 126. However, to reduce a difference between clock signals transmitted to the signal generation circuit 1211 and the signal generation circuit 1213, and a difference between clock signals transmitted to the signal generation circuit 1212 and the signal generation circuit 1214, the drive circuit 125 and the amplification circuit 126 in the radio frequency chip 122b are not used.

It can be learned from the foregoing description that in the first application scenario, each radio frequency chip includes two 2.4 GHz radio frequency channels and two 5 GHz radio frequency channels, and the baseband chip 13 supports operation of the radio frequency chip 122a and the radio frequency chip 122b. Such arrangements implement a multi-band and multi-channel MIMO sending and receiving function of the WLAN device 1. In addition, according to the connection manner shown in FIG. 20, it is arranged that any two radio frequency traces, any two intermediate frequency traces, or any radio frequency trace and any intermediate frequency trace in the WLAN device 1 do not intersect. This reduces a length of the radio frequency trace, and effectively avoids intersection of traces in the WLAN device 1.

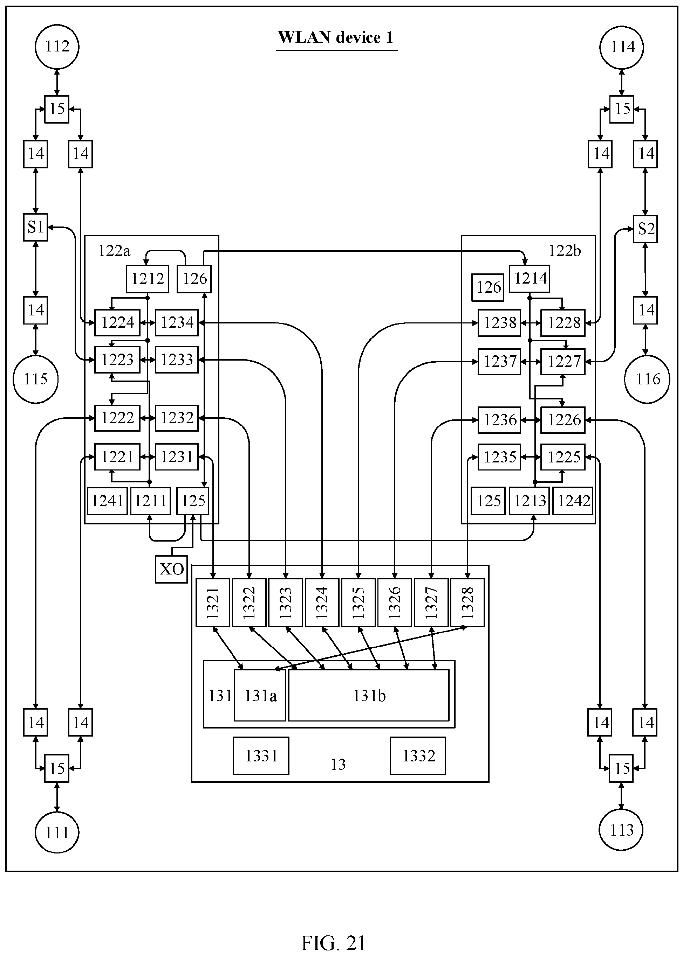

In a second application scenario, as shown in FIG. 21, the WLAN device 1 includes four dual-band antennas 111 to 114, two single-band antennas 115 to 116, two switches S1 and S2, two radio frequency chips 122a and 122b, and one baseband chip 13. The dual-band antennas 111 to 114 are respectively located at four corners of a PCB of the WLAN device, the single-band antenna 115 is located between the dual-band antenna 111 and the dual-band antenna 112, the single-band antenna 116 is located between the dual-band antenna 113 and the dual-band antenna 114, and the switch S1 is located between the dual-band antenna 112 and the single-band antenna 115, and the switch S2 is located between the dual-band antenna 114 and the single-band antenna 116. The radio frequency chip 122a and the radio frequency chip 122b are respectively disposed on the left side and the right side of the central axis of the WLAN device 1, and the baseband chip 1313 is disposed on the central axis of the WLAN device 1.

In a first implementation of the second application scenario, functions and connection manners between components in the radio frequency chip 122a and the radio frequency chip 122b are basically the same as functions and connection manners between the corresponding components in the first application scenario, a difference lies in the following: The signal generation circuit 1211 is configured to provide a radio frequency local oscillator signal that belongs to the 2.4 GHz frequency band to the radio frequency transceiver circuit 1221; the signal generation circuit 1212 is configured to provide a radio frequency local oscillator signal that belongs to the 5 GHz frequency band to the radio frequency transceiver circuits 1222, 1223, and 1224; and the signal generation circuit 1213 is configured to provide a radio frequency local oscillator signal that belongs to the 2.4 GHz frequency band to the radio frequency transceiver circuit 1225. The signal generation circuit 1214 is configured to provide a radio frequency local oscillator signal that belongs to the 5 GHz frequency band to the radio frequency transceiver circuits 1226, 1227, and 1228. In this way, one radio frequency channel in each of the radio frequency chip 122a and the radio frequency chip 122b supports sending and receiving of a 2.4 GHz signal, and three radio frequency channels in each of the radio frequency chip 122a and the radio frequency chip 122b support sending and receiving of a 5 GHz signal.

In a second implementation of the second application scenario, a mode in which the signal generation circuits 1211 to 1214 provide a radio frequency local oscillator signal to the radio frequency transceiver circuit is the same as the mode in the first application scenario. In this case, two radio frequency channels in each of the radio frequency chip 122a and the radio frequency chip 122b support sending and receiving of a 2.4 GHz signal, and two radio frequency channels in each of the radio frequency chip 122a and the radio frequency chip 122b support sending and receiving of a 5 GHz signal.

For the first implementation of the second application scenario, the baseband chip 13 includes one baseband processing circuit 131, eight intermediate frequency processing circuits 1321 to 1328, eight baseband chip pins (not shown in FIG. 21) connected to the eight intermediate frequency processing circuits in a one-to-one correspondence manner, and one transceiving scheduling circuit 133. Functions and connection manners between the components in the baseband chip 13 are basically the same as functions and connection manners between the corresponding components in the first application scenario, and a difference lies in the following: Signals output by the intermediate frequency processing circuits 1321 and 1328 and corresponding baseband chip pins belong to the 2.4 GHz frequency band, and signals output by the intermediate frequency processing circuit 1322, 1323, 1324, 1325, 1326, and 1327 and corresponding baseband chip pins belong to the 5 GHz frequency band. In addition, resources of the baseband processing circuit 131 are combined into two parts related to 131a and 131b. The intermediate frequency processing circuits 1321 and 1328 are connected to 131a, and the intermediate frequency processing circuits 1322, 1323, 1324, 1325, 1326, and 1327 are connected to 131b.

For the second implementation of the second application scenario, the functions and the connection manners between the components in the baseband chip are completely the same as functions and connection manners between the corresponding components in the first application scenario. Details are not described herein again.

As shown in FIG. 21, for a connection manner between the dual-band antenna 111 and the dual-band antenna 113, correspondingly refer to the connection manner in the first application scenario. The dual-band antenna 112 is connected to the switch S1 by using the radio frequency front-end 14 whose operating frequency band is 2.4 GHz, the single-band antenna 115 is connected to the switch S1 by using the radio frequency front-end 14 whose operating frequency band is 5 GHz, the switch S1 is connected to the radio frequency signal pin connected to the radio frequency transceiver circuit 1223, and the dual-band antenna 112 is connected, by using the radio frequency front-end 14 whose operating frequency band is 5 GHz, to the radio frequency signal pin connected to the radio frequency transceiver circuit 1224. The dual-band antenna 114 is connected to the switch S2 by using the radio frequency front-end 14 whose operating frequency band is 2.4 GHz, the single-band antenna 116 is connected to the switch S2 by using the radio frequency front-end 14 whose operating frequency band is 5 GHz, the switch S2 is connected to the radio frequency signal pin connected to the radio frequency transceiver circuit 1227, and the dual-band antenna 114 is connected, by using the radio frequency front-end 14 whose operating frequency band is 5 GHz, to the radio frequency signal pin connected to the radio frequency transceiver circuit 1228. The radio frequency front-end 14 connected to each antenna is disposed close to the antenna connected to the radio frequency front-end 14, to reduce a signal loss between the radio frequency front-end 14 and the antenna. In addition, a distance of the disposed radio frequency front-end 14 to the antenna may be a minimum distance in a manufacturing process condition.

For the first implementation of the second application scenario, the switch S1 controls the radio frequency signal pin connected to the radio frequency transceiver circuit 1223 to be connected to the radio frequency front-end 14 that is connected to the single-band antenna 115 and whose operating frequency band is 5 GHz. The switch S2 controls the radio frequency signal pin connected to the radio frequency transceiver circuit 1227 to be connected to the radio frequency front-end 14 that is connected to the single-band antenna 116 and whose operating frequency band is 5 GHz. For the second implementation of the second application scenario, the switch S1 controls the radio frequency signal pin connected to the radio frequency transceiver circuit 1223 to be connected to the radio frequency front-end 14 that is connected to the dual-band antenna 112 and whose operating frequency band is 2.4 GHz. The switch S2 controls the radio frequency signal pin connected to the radio frequency transceiver circuit 1227 to be connected to the radio frequency front-end 14 that is connected to the dual-band antenna 114 and whose operating frequency band is 2.4 GHz.

In addition, as shown in FIG. 21, for setting manners of the crystal, the drive circuit, and the amplification circuit in the second application scenario, refer to the corresponding descriptions in the first application scenario.

It can be learned from the foregoing description that for the first implementation of the second application scenario, each radio frequency chip includes one 2.4 GHz radio frequency channels and three 5 GHz radio frequency channels, and the baseband chip 13 supports operation of the radio frequency chip 122a and the radio frequency chip 122b. Such arrangements implement the multi-band and multi-channel MIMO sending and receiving function of the WLAN device 1. For the second implementation of the second application scenario, each radio frequency chip includes two 2.4 GHz radio frequency channels and two 5 GHz radio frequency channels, and the baseband chip 13 supports operation of the radio frequency chip 122a and the radio frequency chip 122b. Such arrangements implement the multi-band and multi-channel MIMO sending and receiving function of the WLAN device 1. In addition, an arrangement manner of the second application scenario is more flexible, can be applied to different application scenarios, and can better meet a networking requirement of a user. In addition, according to the connection manner shown in FIG. 21, it is arranged that any two radio frequency traces, any two intermediate frequency traces, or any radio frequency trace and any intermediate frequency trace in the WLAN device 1 do not intersect. This reduces a length of the radio frequency trace, and effectively avoids intersection of traces in the WLAN device 1.

Compared with sending and receiving a signal in the 5 GHz frequency band, sending and receiving a signal in the 2.4 GHz frequency band are greatly interfered. Therefore, compared with the first application scenario, the second application scenario provides more 5G transmit and receive channels. This effectively improves signal quality of a sent and received signal, improves a throughput of the radio frequency chip 12, and better meets a networking requirement of a user.

In conclusion, the WLAN device provided in this embodiment of this application includes a baseband chip, at least two radio frequency chips, and at least four antennas. Each of the at least two radio frequency chips can support at least two frequency bands, so that a radio frequency trace between the antenna and the radio frequency chip can be flexibly disposed based on deployment locations of the antenna and the radio frequency chip. This reduces a length of the radio frequency trace and a probability of intersection of radio frequency traces. The baseband chip includes a baseband processing circuit and a plurality of intermediate frequency processing circuits. A mode in which signals are provided between the baseband processing circuit and a plurality of baseband chip pins of the baseband chip through the plurality of intermediate frequency processing circuits is adjustable, so that an intermediate frequency trace between the baseband chip and the radio frequency chip can be flexibly disposed based on an actual requirement. This reduces a length of the intermediate frequency trace and a probability of intersection of intermediate frequency traces. In addition, it is arranged that any two radio frequency traces, any two intermediate frequency traces, or any radio frequency trace and any intermediate frequency trace in the WLAN device do not intersect, to effectively avoid intersection of traces in the WLAN device. This reduces problems related to costs of the WLAN device and a signal caused by intersection of traces, improves performance of the WLAN device, and helps control costs of the WLAN device.

It may be clearly understood by a person skilled in the art that, for the purpose of convenient and brief description, for specific implementations of the radio frequency chip and the baseband chip described in the embodiments of the WLAN device, refer to corresponding processes in the foregoing radio frequency chip embodiments and baseband chip embodiments, and details are not described herein again.

In this application, the terms "first", "second", "third", and "fourth" are merely used for a purpose of description, and cannot be understood as an indication or implication of relative importance.

The foregoing descriptions are merely optional embodiments of this application, but are not intended to limit this application. Any modification, equivalent replacement, improvement, or the like made without departing from the principle of this application should fall within the protection scope of this application.

## Claims

1. A radio frequency chip, wherein the radio frequency chip comprises at least two signal generation circuits, at least three radio frequency transceiver circuits, and at least three intermediate frequency transceiver circuits, wherein the at least two signal generation circuits comprise a first signal generation circuit and a second signal generation circuit, and the at least three radio frequency transceiver circuits are connected to the at least three intermediate frequency transceiver circuits in a one-to-one correspondence manner;
the first signal generation circuit is configured to generate a first radio frequency local oscillator signal;
the second signal generation circuit is configured to generate a second radio frequency local oscillator signal, wherein a frequency band to which the first radio frequency local oscillator signal belongs is different from a frequency band to which the second radio frequency local oscillator signal belongs;
the first signal generation circuit is configured to provide the first radio frequency local oscillator signal for at least one radio frequency transceiver circuit in the at least three radio frequency transceiver circuits;
the second signal generation circuit is configured to provide the second radio frequency local oscillator signal for at least one radio frequency transceiver circuit in the at least three radio frequency transceiver circuits, wherein any radio frequency transceiver circuit in the at least three radio frequency transceiver circuits receives only a radio frequency local oscillator signal from one of the at least two signal generation circuits at a time; and
each of the at least three radio frequency transceiver circuits is configured to: convert a received radio frequency signal into an intermediate frequency signal based on the received radio frequency local oscillator signal, and send the obtained intermediate frequency signal to a corresponding intermediate frequency transceiver circuit; or convert an intermediate frequency signal from a corresponding intermediate frequency transceiver circuit into a radio frequency signal, and output the obtained radio frequency signal.

2. The radio frequency chip according to claim 1, wherein the radio frequency chip further comprises a first control circuit, and the first control circuit is configured to control a mode in which the at least two signal generation circuits provide the radio frequency local oscillator signal for the at least three radio frequency transceiver circuits.

3. The radio frequency chip according to claim 2, wherein the first control circuit is specifically configured to control a first switch circuit between each of the at least two signal generation circuits and each of the at least three radio frequency transceiver circuits, to change a destination of a radio frequency local oscillator signal output by each of the at least two signal generation circuits.

4. The radio frequency chip according to claim 2, wherein the at least two signal generation circuits are all multi-channel output circuits, each of the three radio frequency transceiver circuits are connected to an output port of each of the at least two signal generation circuits, and the first control circuit is specifically configured to control an output status of the output port of each of the at least two signal generation circuits, to change a destination of a radio frequency local oscillator signal output by each of the at least two signal generation circuits.

5. The radio frequency chip according to any one of claims 1 to 4, wherein the radio frequency chip further comprises a second control circuit, and the second control circuit is specifically configured to control a frequency band of the radio frequency local oscillator signal output by each of the at least two signal generation circuits.

6. The radio frequency chip according to any one of claims 1 to 5, wherein any two signal generation circuits in the at least two signal generation circuits operate in different frequency bands.

7. The radio frequency chip according to any one of claims 2 to 4, wherein each of the at least three intermediate frequency transceiver circuits supports an operating frequency band of each of the at least two signal generator circuits.

8. The radio frequency chip according to any one of claims 1 to 7, wherein the radio frequency chip has at least three radio frequency signal pins, and each of the at least three radio frequency transceiver circuits is connected to each of the at least three radio frequency signal pins by using a second switch circuit.

9. The radio frequency chip according to any one of claims 1 to 8, wherein the radio frequency chip further comprises a transceiving control circuit, and the transceiving control circuit is configured to: control at least one radio frequency transceiver circuit in the at least three radio frequency transceiver circuits and an intermediate frequency transceiver circuit to synchronously send and receive a signal, wherein the at least one radio frequency transceiver circuit receives a radio frequency local oscillator signal of a same frequency band, and the intermediate frequency transceiver circuit corresponds to the at least one radio frequency transceiver circuit.

10. The radio frequency chip according to any one of claims 1 to 8, wherein the radio frequency chip further comprises at least two transceiving control circuits corresponding to at least two frequency bands, and each of the at least two transceiving control circuits is configured to: control at least one radio frequency transceiver circuit in the at least three radio frequency transceiver circuits and an intermediate frequency transceiver circuit to synchronously send and receive a signal, wherein the at least one radio frequency transceiver circuit receives a radio frequency local oscillator signal of a corresponding frequency band, and the intermediate frequency transceiver circuit corresponds to the at least one radio frequency transceiver circuit.

11. The radio frequency chip according to claim 5, wherein the second control circuit is specifically configured to: control the first radio frequency local oscillator signal generated by the first signal generation circuit within a time period t1 to belong to a first frequency band; control the second radio frequency local oscillator signal generated by the second signal generation circuit to belong to a second frequency band; and at least control a radio frequency local oscillator signal generated, within a time period t2, by either of the first signal generation circuit and the second signal generation circuit to belong to a third frequency band, wherein the first frequency band, the second frequency band, and the third frequency band are different from each other, and the time period t1 does not overlap the time period t2.

12. A baseband chip, wherein the baseband chip comprises: a baseband processing circuit and a plurality of intermediate frequency processing circuits, the plurality of intermediate frequency processing circuits comprise a first intermediate frequency processing circuit and a second intermediate frequency processing circuit, and an operating frequency band of the first intermediate frequency processing circuit is different from an operating frequency band of the second intermediate frequency processing circuit; wherein
the baseband processing circuit is configured to: generate a plurality of baseband output signals based on a received data signal, and distribute the plurality of baseband output signals to the plurality of intermediate frequency processing circuits; or obtain data signals by processing baseband input signals received from the plurality of intermediate frequency processing circuits, and output the obtained data signals;
each of the plurality of intermediate frequency processing circuits is configured to: convert the received baseband output signal into an intermediate frequency signal, perform signal processing on the obtained intermediate frequency signal in time domain, and output a processed intermediate frequency signal through a baseband chip pin; or perform signal processing, in time domain, on an intermediate frequency signal received from a baseband chip pin, convert a processed intermediate frequency signal into a baseband input signal, and output the obtained baseband input signal; and
a mode in which signals are provided between the baseband processing circuit and a plurality of baseband chip pins of the baseband chip through the plurality of intermediate frequency processing circuits is adjustable.

13. The baseband chip according to claim 12, wherein a mode in which signals are provided between the baseband processing circuit and the plurality of intermediate frequency processing circuits is adjustable.

14. The baseband chip according to claim 13, wherein the baseband processing circuit is connected to each of a plurality of signal cables, and each of the plurality of intermediate frequency processing circuits is connected to each of the plurality of signal cables by using a first switch circuit.

15. The baseband chip according to claim 14, wherein the first switch circuit comprises a plurality of first sub-switch circuits, and any intermediate frequency processing circuit in the plurality of intermediate frequency processing circuits is connected to one signal cable in the plurality of signal cables by using one first sub-switch circuit.

16. The baseband chip according to claim 13, wherein the baseband processing circuit is connected to the plurality of intermediate frequency processing circuits by using a plurality of signal cables, the plurality of signal cables are connected to the plurality of intermediate frequency processing circuits in a one-to-one correspondence manner, each of the plurality of signal cables has a plurality of signal ends, and a plurality of signal ends of the baseband processing circuit are connected to the plurality of signal ends of each of the plurality of signal cables in a one-to-one correspondence manner by using a second switch circuit.

17. The baseband chip according to claim 16, wherein the second switch circuit comprises a plurality of second sub-switch circuits, and any signal end in the plurality of signal ends of the baseband processing circuit is connected to any signal end of one of the plurality of signal cables by using one second sub-switch circuit.

18. A wireless local area network, WLAN, device, wherein the WLAN device comprises a baseband chip, at least two radio frequency chips, and at least four antennas, wherein
each of the at least two radio frequency chips has at least three radio frequency signal pins and at least three intermediate frequency signal pins, at least three radio frequency signal pins and at least three intermediate frequency signal pins of a same radio frequency chip are in a one-to-one correspondence, and each of the at least two radio frequency chips is connected to at least two antennas in the at least four antennas;
any radio frequency chip in the at least two radio frequency chips is configured to generate radio frequency local oscillator signals that belong to at least two frequency bands, and the at least three radio frequency signal pins of the any radio frequency chip comprise a first radio frequency signal pin and a second radio frequency signal pin;
the any radio frequency chip is configured to: convert, based on a radio frequency local oscillator signal that belongs to one frequency band in the at least two frequency bands, a radio frequency signal received from the first radio frequency signal pin into an intermediate frequency signal, and output the intermediate frequency signal obtained through conversion from an intermediate frequency signal pin corresponding to the first radio frequency signal pin; and convert an intermediate frequency signal received from the intermediate frequency signal pin corresponding to the first radio frequency signal pin into a radio frequency signal, and output the radio frequency signal obtained through conversion from the first radio frequency signal pin;
the any radio frequency chip is configured to convert, based on a radio frequency local oscillator signal that belongs to another frequency band in the at least two frequency bands, a radio frequency signal received from the second radio frequency signal pin into an intermediate frequency signal, and output the intermediate frequency signal obtained through conversion from an intermediate frequency signal pin corresponding to the second radio frequency signal pin; and convert an intermediate frequency signal received from the intermediate frequency signal pin corresponding to the second radio frequency signal pin into a radio frequency signal, and output the radio frequency signal obtained through conversion from the second radio frequency signal pin;
the baseband chip has a plurality of baseband chip pins, and at least three intermediate frequency signal pins of each of the at least two radio frequency chips are connected to at least three baseband chip pins of the plurality of baseband chip pins in a one-to-one correspondence manner;
the baseband chip is configured to: obtain an intermediate frequency signal based on a received data signal, and provide the obtained intermediate frequency signal to the radio frequency chip through the baseband chip pin of the baseband chip; or obtain a data signal based on an intermediate frequency signal received from any one of the plurality of baseband chip pins, and output the obtained data signal, wherein operating frequency bands corresponding to the plurality of baseband chip pins are adjustable; and
connection lines between all radio frequency signal pins and corresponding antennas in the WLAN device do not intersect, and connection lines between all intermediate frequency signal pins and corresponding baseband chip pins in the WLAN device do not intersect, and a connection line between any radio frequency signal pin in all the radio frequency signal pins and a corresponding antenna does not intersect a connection line between any intermediate frequency signal pin in all the intermediate frequency signal pins and a corresponding baseband chip pin.
